(19) Europäisches Patentamt
European Patent Office
Office européen des brevets

(11) EP 2 592 834 A1

(12) **EUROPEAN PATENT APPLICATION**
published in accordance with Art. 153(4) EPC

(43) Date of publication:
**15.05.2013 Bulletin 2013/20**

(51) Int Cl.:
***H04N 7/32*** *(2006.01)*

(21) Application number: **11803435.4**

(22) Date of filing: **17.06.2011**

(86) International application number:
**PCT/JP2011/063906**

(87) International publication number:
**WO 2012/005099 (12.01.2012 Gazette 2012/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2010 JP 2010157328**

(71) Applicant: **Sony Corporation
Tokyo 108-0075 (JP)**

(72) Inventors:
• **WANG, Peng
Tokyo 108-0075 (JP)**
• **SATO, Kazushi
Tokyo 108-0075 (JP)**

(74) Representative: **Turner, James Arthur
D Young & Co LLP
120 Holborn
London EC1N 2DY (GB)**

(54) **IMAGE PROCESSING DEVICE, AND IMAGE PROCESSING METHOD**

(57) Provided is an image processing device including a shape determination section for determining a shape of a block set in an image using shape determination information for determining a shape of a block that is in accordance with a size, a motion vector setting section for arranging a prediction unit in each block in the image according to the shape determined by the shape determination section, and setting, for each arranged prediction unit, a motion vector to be used for prediction of an image in the prediction unit, and an encoding section for encoding the image using the motion vector set by the motion vector setting section.

**FIG.6**

**Description**

Technical Field

The present disclosure relates to an image processing device, and an image processing method.

Background Art

Conventionally, a compression technology is widespread that has its object to effectively transmit or accumulate digital images, and that compresses the amount of information of an image by motion compensation and orthogonal transform such as discrete cosine transform, for example, by using redundancy unique to the image. For example, an image encoding device and an image decoding device conforming to a standard technology such as H.26x standards developed by ITU-T or MPEG-y standards developed by MPEG (Moving Picture Experts Group) are widely used in various scenes, such as accumulation and distribution of images by a broadcaster and reception and accumulation of images by a general user.

MPEG2 (ISO/IEC 13818-2) is one of MPEG-y standards defined as a general-purpose image encoding method. MPEG2 is capable of handling both interlaced scanning images and non-interlaced images, and targets high-definition images, in addition to digital images in standard resolution. MPEG2 is currently widely used in a wide range of applications including professional uses and consumer uses. According to MPEG2, for example, by allocating a bit rate of 4 to 8 Mbps to an interlaced scanning image in standard resolution of 720x480 pixels and a bit rate of 18 to 22 Mbps to an interlaced scanning image in high resolution of 1920x1088 pixels, both a high compression ratio and a desirable image quality can be realized.

MPEG2 was primarily for high-quality encoding suitable for broadcasting use, and did not handle a bit rate lower than MPEG1, that is, a high compression ratio. However, with the spread of mobile terminals of recent years, the demand for an encoding method enabling a high compression ratio is increasing. Accordingly, standardization of an MPEG4 encoding method was newly promoted. With regard to an image encoding method which is a part of the MPEG4 encoding method, its standards were accepted as an international standard (ISO/IEC 14496-2) in December 1998.

The H.26x standards (ITU-T Q6/16 VCEG) are standards developed initially with the aim of performing encoding that is suitable for communications such as video telephones and video conferences. The H.26x standards are known to require a large computation amount for encoding and decoding, but to be capable of realizing a higher compression ratio, compared with the MPEG-y standards. Furthermore, with Joint Model of Enhanced-Compression Video Coding, which is a part of the activities of MPEG4, a standard allowing realization of a higher compression ratio by adopting a new function while being based on the H.26x standards is developed. This standard was made an international standard under the names of H.264 and MPEG-4 Part10 (Advanced Video Coding; AVC) in March 2003.

Furthermore, in recent years, a need is also recognized for an encoding method with a further increased compression ratio whose aim is to compress a large image of 4000x2000 pixels or to deliver a high-vision image in an environment where there is a restriction on a transmission capacity, such as the Internet. Thus, Non-Patent Literature 1 proposes to set the size of a macro block to a size larger than that of MPEG2 or H.264/AVC (for example, to 32x32 pixels) and to perform intra prediction. Also, Non-Patent Literature 2 proposes to set the size of a macro block to a size larger than that of MPEG2 or H.264/AVC (for example, to 32x32 pixels) and to perform inter prediction. By performing motion prediction using a macro block of a greater size, the effect of compression of the data amount by the motion prediction can be enhanced, and the compression ratio of an image may be further increased.

Citation List

Non-Patent Literature

Non-Patent Literature 1: Sung-Chang Lim, Hahyun Lee, Jinho Lee, Jongho Kim, Haechul Choi, Seyoon Jeong, Jin Soo Choi, "Intra coding using extended block size", (ITU-Telecommunications Standardization Sector, Study Group 16 Question 6, Video Coding Experts Group, 38th Meeting: London, UK/Geneva, CH, 1-8 July, 2009, D)
Non-Patent Literature 2: Qualcomm Inc, "Video Coding Using Extended Block1 Sizes" (STUDY GROUP16-CONTRIBUTION 123, ITU-Telecommunications Standardization Sector, January 2009)

Summary of Invention

Technical Problem

However, that the largest size of a macro block is extended means that the size of a line memory required for encoding or decoding of an image also becomes larger. For example, with H.264/AVC, since a largest macro block (LMB) of 16x16 pixels may be used, the size of a line memory required for encoding or decoding is 16 pixels. In contrast, with the method proposed in Non-Patent Literature 1 or 2 mentioned above, since a largest macro block of 32x32 pixels may be used, a line memory with a size of 32 pixels is necessary. However, unnecessarily increasing the size of a line memory is not advantageous from the standpoint of the cost of the hardware. Also, for hardware with restricted memory resources, it is desirable that an image encoded at a high compression ratio can be reproduced without extending the line memory as much as possible.

Thus, the technology according to the present disclosure intends to provide an image processing device and an image processing method which enable handling of a larger block while suppressing the increase in a line memory.

According to an embodiment of the present disclosure, there is an image processing device including a shape determination section for determining a shape of a block set in an image using shape determination information for determining a shape of a block that is in accordance with a size, a motion vector setting section for arranging a prediction unit in each block in the image according to the shape determined by the shape determination section, and setting, for each arranged prediction unit, a motion vector to be used for prediction of an image in the prediction unit, and an encoding section for encoding the image using the motion vector set by the motion vector setting section.

The image processing device may be typically realized as an image encoding device that encodes images.

Further, the shape determination information may include information about a boundary value for a block size that separates a square block and a non-square block.

Further, the shape determination section may determine that a shape of a block of a larger size than the boundary value is a non-square, and that a shape of a block of a smaller size than the boundary value is a square.

Further, a shape of each block in the image may be a square or a rectangle with a fixed ratio of a long side to a short side.

Further, a shape of each block in the image is square or a rectangle, and the shape determination information may include ratio information defining a ratio of a long side to a short side of a block.

Further, the shape determination information may include number-of-layers information defining the number of layers whose ratios of a long side to a short side of a block are different from one another, and the ratio information may be information defining the ratio for each of the layers.

Further, the motion vector setting section may output, for each block, information indicating a size of each block set in the image and prediction mode information specifying an arrangement pattern of a prediction unit in the block.

Further, a shape of each block in the image is a square or a rectangle, and candidates for arrangement of a prediction unit for a square block and candidates for arrangement of a prediction unit for a rectangular block may be different.

Further, the shape determination information may be allowed to be input by a user.

Further, the image processing device may further include transmission means for transmitting an encoded stream generated by the encoding section and the shape determination information.

Further, the encoding section may multiplex the shape determination information to a sequence parameter set, a picture parameter set or a slice header of the encoded stream.

Further, according to an embodiment of the present disclosure, there is provided an image processing method for processing an image, including determining a shape of a block set in an image using shape determination information for determining a shape of a block that is in accordance with a size, arranging a prediction unit in each block in the image according to the determined shape, and setting, for each arranged prediction unit, a motion vector to be used for prediction of an image in the prediction unit, and encoding the image using the set motion vector.

Further, according to an embodiment of the present disclosure, there is provided an image processing device including a shape determination section for determining a shape of each block in an image using shape determination information for determining a shape of a block that is in accordance with a size and a size of a block set in the image at a time of encoding of the image, a prediction unit determination section for determining an arrangement of a prediction unit in each block according to the shape of each block determined by the shape determination section, a prediction section for generating a predicted image for each block using the arrangement of a prediction unit determined by the prediction unit determination section and a motion vector acquired for each prediction unit, and a decoding section for decoding an encoded stream in which the image is encoded, using the predicted image generated by the prediction section.

The image processing device may be typically realized as an image decoding device that decodes images.

Further, the shape determination information may include information about a boundary value for a block size that separates a square block and a non-square block.

Further, a shape of each block in the image may be a square or a rectangle with a fixed ratio of a long side to a short side.

Further, a shape of each block in the image is a square or a rectangle, and the shape determination information may include ratio information defining a ratio of a long side to a short side of a block.

Further, the shape determination information may include number-of-layers information defining the number of layers whose ratios of a long side to a short side of a block are different from one another, and the ratio information may be information defining the ratio for each of the layers.

Further, the shape determination section may acquire the shape determination information from a sequence parameter set, a picture parameter set or a slice header multiplexed to the encoded stream.

Further, the shape determination section may acquire information for determining a size of each block from a block header included in the encoded stream.

Further, a shape of each block in the image is a square or a rectangle, and candidates for arrangement of a prediction unit for a square block and candidates for arrangement of a prediction unit for a rectangular block may be different.

Further, the shape determination information may be information acquired based on a user input at a device that has encoded the image.

Further, the image processing device may further include receiving means for receiving the encoded stream and the shape determination information.

Further, according to an embodiment of the present disclosure, there is provided an image processing method for processing an image, including determining a shape of each block in an image using shape determination information for determining a shape of a block that is in accordance with a size and a size of a block set in the image at a time of encoding of the image, determining an arrangement of a prediction unit in each block according to the determined shape of each block, generating a predicted image for each block using the determined arrangement of a prediction unit and a motion vector acquired for each prediction unit, and decoding an encoded stream in which the image is encoded, using the generated predicted image.

Advantageous Effects of Invention

As described above, according to the image processing device and the image processing method of the present disclosure, a larger block can be handled while suppressing the increase in a line memory.

Brief Description of Drawings

[Fig. 1] Fig. 1 is a block diagram showing an example of a configuration of an image encoding device according to an embodiment.
[Fig. 2] Fig. 2 is a block diagram showing an example of a detailed configuration of a motion estimation section of an image encoding device of an embodiment.
[Fig. 3] Fig. 3 is an explanatory diagram for describing a first embodiment of shape determination information.
[Fig. 4] Fig. 4 is an explanatory diagram showing a first example of a hierarchical structure of a coded block that can be defined by the first embodiment of the shape determination information.
[Fig. 5] Fig. 5 is an explanatory diagram showing a second example of the hierarchical structure of a coded block that can be defined by the first embodiment of the shape determination information.
[Fig. 6] Fig. 6 is an explanatory diagram showing a third example of the hierarchical structure of a coded block that can be defined by the first embodiment of the shape determination information.
[Fig. 7] Fig. 7 is an explanatory diagram for describing arrangement of prediction units in a square block.
[Fig. 8] Fig. 8 is an explanatory diagram for describing arrangement of prediction units in a block having a 2NxN shape.
[Fig. 9] Fig. 9 is an explanatory diagram for describing an estimation range for a motion vector in the first embodiment of the shape determination information.
[Fig. 10] Fig. 10 is an explanatory diagram for describing arrangement of transform units in a block having a 2NxN shape.
[Fig. 11] Fig. 11] is an explanatory diagram showing an example of a coded block pattern with respect to a transform unit having a 2NxN shape.
[Fig. 12] Fig. 12 is an explanatory diagram for describing a second embodiment of the shape determination information.
[Fig. 13] Fig. 13 is an explanatory diagram showing an example of a hierarchical structure of a coded block that may be defined by the second embodiment of the shape determination information.

[Fig. 14] Fig. 14 is an explanatory diagram for describing arrangement of prediction units in a block having a 4NxN shape.

[Fig. 15] Fig. 15 is an explanatory diagram for describing transform units that may be set in a block having a 4NxN shape.

[Fig. 16] Fig.16 is an explanatory diagram showing an example of a coded block pattern of a block having a 4NxN shape.

[Fig. 17] Fig. 17 is an explanatory diagram for describing a third embodiment of the shape determination information.

[Fig. 18] Fig. 18 is an explanatory diagram showing a first example of a hierarchical structure of a coded block that can be defined by the third embodiment of the shape determination information.

[Fig. 19] Fig. 19 is an explanatory diagram showing a second example of the hierarchical structure of a coded block that can be defined by the third embodiment of the shape determination information.

[Fig. 20] Fig. 20 is an explanatory diagram showing a third example of the hierarchical structure of a coded block that can be defined by the third embodiment of the shape determination information.

[Fig. 21] Fig. 21 is an explanatory diagram showing a fourth example of the hierarchical structure of a coded block that can be defined by the third embodiment of the shape determination information.

[Fig. 22] Fig. 22 is a first half of a flow chart showing an example of a flow of a motion estimation process according to an embodiment.

[Fig. 23] Fig. 23 is a second half of the flow chart showing an example of a flow of a motion estimation process according to an embodiment.

[Fig. 24] Fig. 24 is a block diagram showing an example of a configuration of an image decoding device according to an embodiment.

[Fig. 25] Fig. 25 is a block diagram showing an example of a detailed configuration of a motion compensation section of an image decoding device according to an embodiment.

[Fig. 26] Fig. 26 is a flow chart showing an example of a flow of a motion compensation process according to an embodiment.

[Fig. 27] Fig. 27 is a block diagram showing an example of a schematic configuration of a television.

[Fig. 28] Fig. 28 is a block diagram showing an example of a schematic configuration of a mobile telephone.

[Fig. 29] Fig. 29 is a block diagram showing an example of a schematic configuration of a recording/reproduction device.

[Fig. 30] Fig. 30 is a block diagram showing an example of a schematic configuration of an image capturing device.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Furthermore, the "Description of Embodiments" will be described in the order mentioned below.

1. Example Configuration of Image Encoding Device According to an Embodiment
2. Example of Shape Determination Information
3. Flow of Process at the Time of Encoding According to an Embodiment
4. Example Configuration of Image Decoding Device According to an Embodiment
5. Flow of Process at the Time of Decoding According to an Embodiment
6. Example Application
7. Summary

<1. Example Configuration of Image Encoding Device According to an Embodiment>

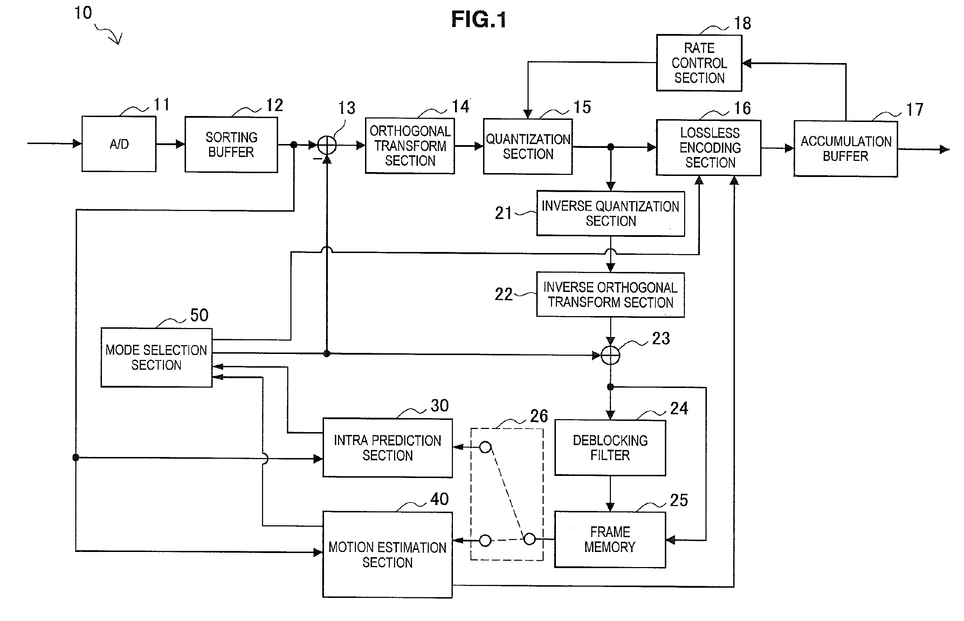

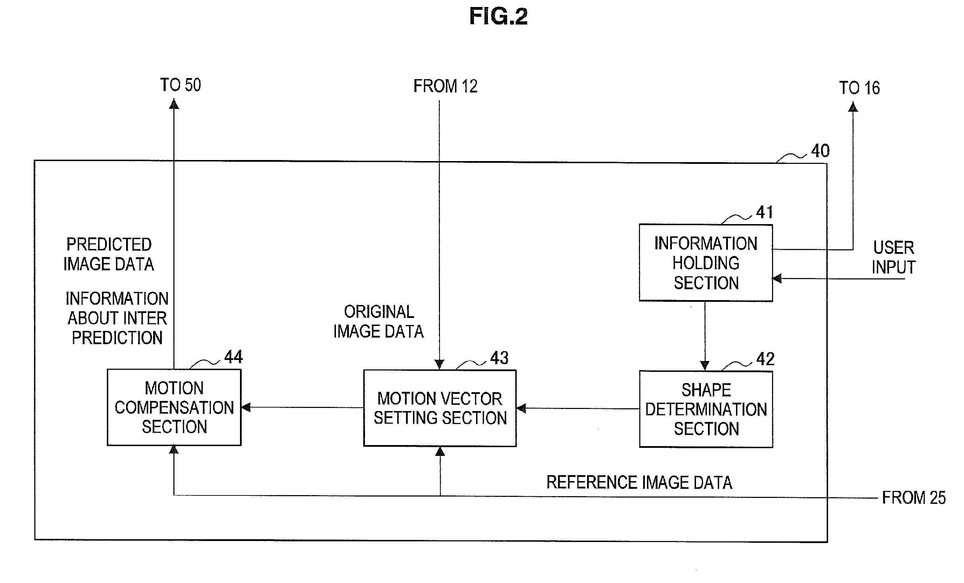

First, an example configuration of an image encoding device according to an embodiment will be described using Figs. 1 and 2.

[1-1. Example of Overall Configuration]

Fig. 1 is a block diagram showing an example of a configuration of an image encoding device 10 according to an embodiment. Referring to Fig. 1, the image encoding device 10 includes an A/D (Analogue to Digital) conversion section 11, a sorting buffer 12, a subtraction section 13, an orthogonal transform section 14, a quantization section 15, a lossless encoding section 16, an accumulation buffer 17, a rate control section 18, an inverse quantization section 21, an inverse orthogonal transform section 22, an addition section 23, a deblocking filter 24, a frame memory 25, a selector 26, an intra prediction section 30, a motion estimation section 40, and a mode selection section 50.

The A/D conversion section 11] converts an image signal input in an analogue format into image data in a digital format, and outputs a series of digital image data to the sorting buffer 12.

The sorting buffer 12 sorts the images included in the series of image data input from the A/D conversion section 11. After sorting the images according to the a GOP (Group of Pictures) structure according to the encoding process, the sorting buffer 12 outputs the image data which has been sorted to the subtraction section 13, the intra prediction section 30, and the motion estimation section 40.

The image data input from the sorting buffer 12 and predicted image data selected by the mode selection section 50 described later are supplied to the subtraction section 13. The subtraction section 13 calculates predicted error data which is a difference between the image data input from the sorting buffer 12 and the predicted image data input from the mode selection section 50, and outputs the calculated predicted error data to the orthogonal transform section 14.

The orthogonal transform section 14 performs orthogonal transform for each transform unit (TU) described later on the predicted error data input from the subtraction section 13. The orthogonal transform to be performed by the orthogonal transform section 14 may be discrete cosine transform (DCT) or Karhunen-Loeve transform, for example. The orthogonal transform section 14 outputs transform coefficient data acquired by the orthogonal transform process to the quantization section 15.

The transform coefficient data input from the orthogonal transform section 14 and a rate control signal from the rate control section 18 described later are supplied to the quantization section 15. The quantization section 15 quantizes the transform coefficient data, and outputs the transform coefficient data which has been quantized (hereinafter, referred to as quantized data) to the lossless encoding section 16 and the inverse quantization section 21. Also, the quantization section 15 switches a quantization parameter (a quantization scale) based on the rate control signal from the rate control section 18 to thereby change the bit rate of the quantized data to be input to the lossless encoding section 16.

The quantized data input from the quantization section 15 and information described later about intra prediction or inter prediction generated by the intra prediction section 30 or the motion estimation section 40 and selected by the mode selection section 50 are supplied to the lossless encoding section 16. Also, definition information about the shape of a block output from the motion estimation section 40 is supplied to the lossless encoding section 16. The information about intra prediction may include prediction mode information indicating the optimal intra prediction mode for each block, for example. Also, as will be described later in detail, the information about inter prediction may include size specification information specifying the size of a block set in an image, prediction mode information specifying the arrangement of prediction units in each block, motion vector information, and reference image information, for example. Furthermore, the definition information about the shape of a block may include largest size information, smallest size information, and shape determination information described later.

The lossless encoding section 16 generates an encoded stream by performing a lossless encoding process on the quantized data. The lossless encoding by the lossless encoding section 16 may be variable-length coding or arithmetic coding, for example. Furthermore, the lossless encoding section 16 multiplexes the information about intra prediction or the information about inter prediction mentioned above to the header of the encoded stream (for example, a block header, a slice header or the like). Furthermore, the lossless encoding section 16 multiplexes the definition information supplied from the motion estimation section 40 to, for example, a sequence parameter set, a picture parameter set, or the slice header of the encoded stream. Then, the lossless encoding section 16 outputs the generated encoded stream to the accumulation buffer 17.

The accumulation buffer 17 temporarily stores the encoded stream input from the lossless encoding section 16 using a storage medium, such as a semiconductor memory. Then, the accumulation buffer 17 outputs the accumulated encoded stream at a rate according to the band of a transmission line (or an output line from the image encoding device 10).

The rate control section 18 monitors the free space of the accumulation buffer 17. Then, the rate control section 18 generates a rate control signal according to the free space on the accumulation buffer 17, and outputs the generated rate control signal to the quantization section 15. For example, when there is not much free space on the accumulation buffer 17, the rate control section 18 generates a rate control signal for lowering the bit rate of the quantized data. Also, for example, when the free space on the accumulation buffer 17 is sufficiently large, the rate control section 18 generates a rate control signal for increasing the bit rate of the quantized data.

The inverse quantization section 21 performs an inverse quantization process on the quantized data input from the quantization section 15. Then, the inverse quantization section 21 outputs transform coefficient data acquired by the inverse quantization process to the inverse orthogonal transform section 22.

The inverse orthogonal transform section 22 performs an inverse orthogonal transform process on the transform coefficient data input from the inverse quantization section 21 to thereby restore the predicted error data. Then, the inverse orthogonal transform section 22 outputs the restored predicted error data to the addition section 23.

The addition section 23 adds the restored predicted error data input from the inverse orthogonal transform section 22 and the predicted image data input from the mode selection section 50 to thereby generate decoded image data. Then, the addition section 23 outputs the generated decoded image data to the deblocking filter 24 and the frame memory 25.

The deblocking filter 24 performs a filtering process for reducing block distortion occurring at the time of encoding of an image. The deblocking filter 24 filters the decoded image data input from the addition section 23 to remove the block distortion, and outputs the decoded image data after filtering to the frame memory 25.

The frame memory 25 stores, using a storage medium, the decoded image data input from the addition section 23 and the decoded image data after filtering input from the deblocking filter 24.

The selector 26 reads, from the frame memory 25, the decoded image data before filtering that is to be used for the intra prediction, and supplies the decoded image data which has been read to the intra prediction section 30 as reference image data. Also, the selector 26 reads, from the frame memory 25, the decoded image data after filtering to be used for the inter prediction, and supplies the decoded image data which has been read to the motion estimation section 40 as reference image data.

The intra prediction section 30 performs an intra prediction process in each intra prediction mode defined by H.264/AVC, based on the encoding target image data that is input from the sorting buffer 12 and the decoded image data supplied via the selector 26. For example, the intra prediction section 30 evaluates the prediction result of each intra prediction mode using a predetermined cost function. Then, the intra prediction section 30 selects an intra prediction mode by which the cost function value is the smallest, that is, an intra prediction mode by which the compression ratio (the encoding efficiency) is the highest, as the optimal intra prediction mode. Furthermore, the intra prediction section 30 outputs, to the mode selection section 50, prediction mode information indicating the optimal intra prediction mode, the predicted image data, and the information about intra prediction such as the cost function value. Moreover, the intra prediction section 30 may perform the intra prediction process with a larger block than each intra prediction mode defined by H.264/AVC, based on the encoding target image data input from the sorting buffer 12 and the decoded image data supplied via the selector 26. Also in this case, the intra prediction section 30 evaluates the prediction result of each intra prediction mode using a predetermined cost function, and outputs, to the mode selection section 50, the information about intra prediction for the optimal intra prediction mode.

The motion estimation section 40 performs a motion estimation process using a largest block size larger than that of the macro block defined by H.264/AVC, based on the encoding target image data input from the sorting buffer 12 and the decoded image data supplied via the selector 26. For example, the motion estimation section 40 arranges prediction units in a largest block that can be set and in each block obtained by partitioning the largest block using a plurality of prediction modes, respectively. Also, the motion estimation section 40 determines a motion vector for each prediction unit arranged by each prediction mode. Then, the motion estimation section 40 evaluates each prediction mode using a predetermined cost function. Then, the motion estimation section 40 selects a block size and a prediction mode by which the cost function value is the smallest, that is, a block size and a prediction mode by which the compression ratio (the encoding efficiency) is the highest, as the optimal block size and the optimal prediction mode. The motion estimation process by the motion estimation section 40 will be described later in greater detail. The motion estimation section 40 outputs, to the mode selection section 50, the information about inter prediction, such as the size specification information specifying a block size by which the cost function value is the smallest, the prediction mode information specifying the arrangement of prediction units, the motion vector information, the reference image information, the predicted image data, the cost function value and the like.

The mode selection section 50 compares the cost function value related to the intra prediction input from the intra prediction section 30 and the cost function value related to the inter prediction input from the motion estimation section 40. Then, the mode selection section 50 selects a prediction method with a smaller cost function value, from the intra prediction and the inter prediction. In the case of selecting the intra prediction, the mode selection section 50 outputs the information about intra prediction to the lossless encoding section 16, and also, outputs the predicted image data to the subtraction section 13. Also, in the case of selecting the inter prediction, the mode selection section 50 outputs the size specification information about the inter prediction, the prediction mode information, the motion vector information and the reference image information to the lossless encoding section 16, and also, outputs the predicted image data to the subtraction section 13.

[1-2. Example Configuration of Motion Estimation Section]

Fig. 2 is a block diagram showing an example of a detailed configuration of the motion estimation section 40 of the image encoding device 10 shown in Fig. 1. Referring to Fig. 2, the motion estimation section 40 includes an information holding section 41, a shape determination section 42, a motion vector setting section 43, and a motion compensation section 44.

The information holding section 41 holds in advance, using a storage medium such as a semiconductor memory, the largest size information, the smallest size information, and the shape determination information. The largest size information is information defining the size of a largest block that can be set in an image. For example, the size of a largest block that can be set in an image according to H264/AVC is 16x16 pixels. On the other hand, according to extended standards, the largest size information may indicate a value exceeding 16 (for example, 32, 64, 128, or the like). The smallest size information is information defining the size of a smallest block that can be set in an image.

The shape determination information is information defined to determine the shape of a block in accordance with a size. That is, the shape determination information is information allowing, in a case a size is specified for a certain block, to determine the shape of the block according to the shape determination information and the specified size. A concrete example of the shape determination information will be described later in detail by citing three examples.

Additionally, in the present embodiment, the size of a block used for encoding of an image may be expressed by the number of times of partitioning from a largest block. For example, if the number of times of partitioning is zero, the size of the block is equal to the size of the largest block. If the number of times of partitioning from a largest block is one or more, the size of the block is smaller than the size of the largest block. In the present specification, the number of times of partitioning of each block from a largest block will be referred to as a "depth" of a block (or a layer).

The shape determination section 42 determines the shape of a block that can be set in an image using the shape determination information described above held in the information holding section 41. In the present embodiment, the shape of each block in an image is either a square or a rectangle. Accordingly, the shape determination section 42 refers to the shape determination information, and, for example, determines that the shape of a block of a certain size is a rectangle and the shape of a block of another size is a square.

Additionally, as shown in Fig. 2, the information held in the information holding section 41 may be input or updated by a user using the image encoding device 10 (for example, a developer who embeds the image encoding device 10 in an electronic appliance as an encoder, or the like). That is, a user using the image encoding device 10 is allowed to specify the largest size information, the smallest size information, and the shape determination information to be used at the time of an image encoding process, according to the use of the image encoding device 10.

For example, the user may specify the shape determination information such that the shape of a block of largest size will be a rectangle. A block of 32x16 pixels, for example, can therefore be used as a block of a size exceeding the largest macro block size (16x16 pixels) defined by H.264/AVC, for example. In this case, while a line memory of a size the same as that of a conventional method (16 pixels) can be used because the length of the short side of the block is not changed, the block size is extended and thus the compression ratio of an image can be further increased. Also, for example, in the case of embedding the image encoding device 10 in an appliance capable of securing a line memory of a larger size, the user may specify the shape determination information such that the shape of the block of largest size will be a square. These pieces of definition information specified by the user and held in the information holding section 41 are output to the lossless encoding section 16 shown in Fig. 1

The motion vector setting section 43 includes prediction unit arrangement means for arranging a prediction unit in each block in the image, according to the shape of the block described above determined by the shape determination section 42. Then, the motion vector setting section 43 sets, for each prediction unit arranged according to the shape of the block, a motion vector to be used for prediction of an image in the prediction unit, for example.

More specifically, for example, the motion vector setting section 43 first arranges prediction units in a plurality of prediction modes (arrangement patterns of the prediction units) in a block at a depth zero (a largest block), and decides the motion vector of each prediction unit. Also, the motion vector setting section 43 arranges prediction units in a plurality of prediction modes in a block at a depth one, and decides a motion vector of each prediction unit. Likewise, the motion vector setting section 43 arranges prediction units in a plurality of prediction modes in a corresponding block at each depth down to a block of a smallest size, and decides a motion vector of each prediction unit. As a result, a plurality of sets of motion vectors each corresponding to a combination of a depth and a prediction mode are decided. Additionally, when deciding the motion vector of each prediction unit, a pixel value of an original image in a prediction unit and a pixel value of a reference image input from the frame memory 25 are used. Next, the motion vector setting section 43 selects an optimal combination of a depth and a prediction mode by which the cost function value will be the smallest. Then, the motion vector setting section 43 outputs, to the motion compensation section 44, the size specification information specifying the block size according to the selected combination (information corresponding to the depth), the prediction mode information, the motion vector information, the reference image information, and the cost function value.

Here, in the present embodiment, each block has a square or rectangle shape according to the size of the block, as described above. Thus, candidates for arrangement of prediction units for a square block and candidates for arrangement of prediction units for a rectangular block in the motion vector setting section 43 are different. Such candidates for arrangement of prediction units will be further described later.

The motion compensation section 44 generates predicted image data using an optimal motion vector set by the motion vector setting section 43 and the reference image data (decoded image data after filtering) input from the frame memory 25. Then, the motion compensation section 44 outputs, to the mode selection section 50, the generated predicted image data, and the information about inter prediction such as the size specification information, the prediction mode information, the motion vector information, the reference image information and the like.

<2. Example of Shape Determination Information>

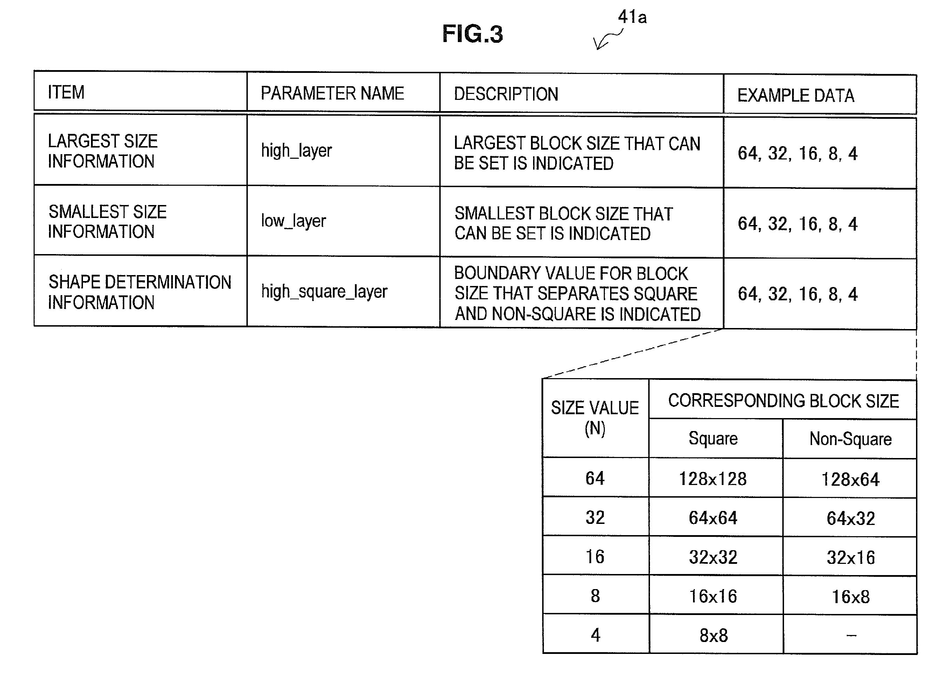

Next, three typical embodiments of the shape determination information will be described using Figs. 3 to 21.

[2-1. First Embodiment]

(Explanation on Data)

Fig. 3 is an explanatory diagram for describing a first embodiment of the shape determination information. Referring to Fig. 3, definition information 41a that may be held in the information holding section 41 in the first embodiment is shown. The definition information 41a includes largest size information "high_layer", smallest size information "low_layer", and shape determination information "high_square_layer". Additionally, the name of each parameter shown here is only an example, and other parameter names may also be used.

The largest size information "high_layer" indicates the size of a largest block that can be set in an image. The value of the largest size information is 64, 32, 16, 8, or 4, for example. The smallest size information "low_layer" indicates the size of a smallest block that can be set in an image. The value of the smallest size information is 64, 32, 16, 8, or 4, for example. The largest size information and the smallest size information are information that can also be used in H264/AVC, for example.

The "high_square_layer", which is the shape determination information according to the present embodiment, indicates a boundary value for the size of a block that separates a square block and a non-square block. The "high_square_layer" may take a value of a block size within a range defined by "high_layer" and "low_layer" (64, 32, 16, 8, or 4 in the example of Fig. 3). The boundary value "high_square_layer" means that a block whose block size exceeds the value is a non-square and a block whose block size is equal to or below the value is a square. Accordingly, in the case of "high_square_layer" = "high_layer", the blocks at all the depths (of all the sizes) are squares. On the other hand, in the case of "high_square_layer" < "low_layer", the blocks at all the depths (of all the sizes) are non-squares.

In the present embodiment, the shape of a non-square block is a rectangle having a fixed ratio of a long side to a short side. In the following explanation, a case where the ratio of a long side to a short side is 2 to 1 will be described. However, it is not limited to such an example, and other ratios may also be used as the ratio of a long side to a short side of a non-square block.

Additionally, the size values of "high_layer", "low_layer", and "high_square_layer" correspond to the block sizes shown in the lower table in Fig. 3, for example. That is, in the case a size value (N) is 64, the size of a square block is 128x128 pixels and the size of a rectangular block is 128x64 pixels. In the case the size value (N) is 32, the size of the square block is 64x64 pixels and the size of the rectangular block is 64x32 pixels. In the case the size value (N) is 16, the size of the square block is 32x32 pixels and the size of the rectangular block is 32x16 pixels. In the case the size value (N) is 8, the size of the square block is 16x16 pixels and the size of the rectangular block is 16x8 pixels. In the case the size value (N) is 4, the size of the square block is 8x8 pixels and there is no rectangular block. Incidentally, these size definitions are merely examples, and other size value definitions may also be used.

The semantics of the definition information 41a will be shown below. Additionally, in the following semantics, "HighSQsize" and "LowSQsize" are variables indicating the upper limit and the lower limit, respectively, of the size of a block having a square shape. Also, "HighNSsize" and "LowNSsize" are variables indicating the upper limit and the lower limit, respectively, of the size of a block having a non-square shape:

[Math. 1]

```
If high_square_layer = high_layer   // there are only Square layers
        HighSQsize = high_layer
        LowSQsize = low_layer
If high_square_layer < low_layer     // there are only Non-Square layers
        HighNSsize = high_layer
        LowNSsize = low_layer
Else                    // there will be both Non-Square and Square layers
        HighNSsize = high_layer
        LowNSsize = high_square_layer x 2
        HighSQsize = high_square_layer
        LowSQsize = low_layer
```

(Hierarchical Structure of Coded Block)

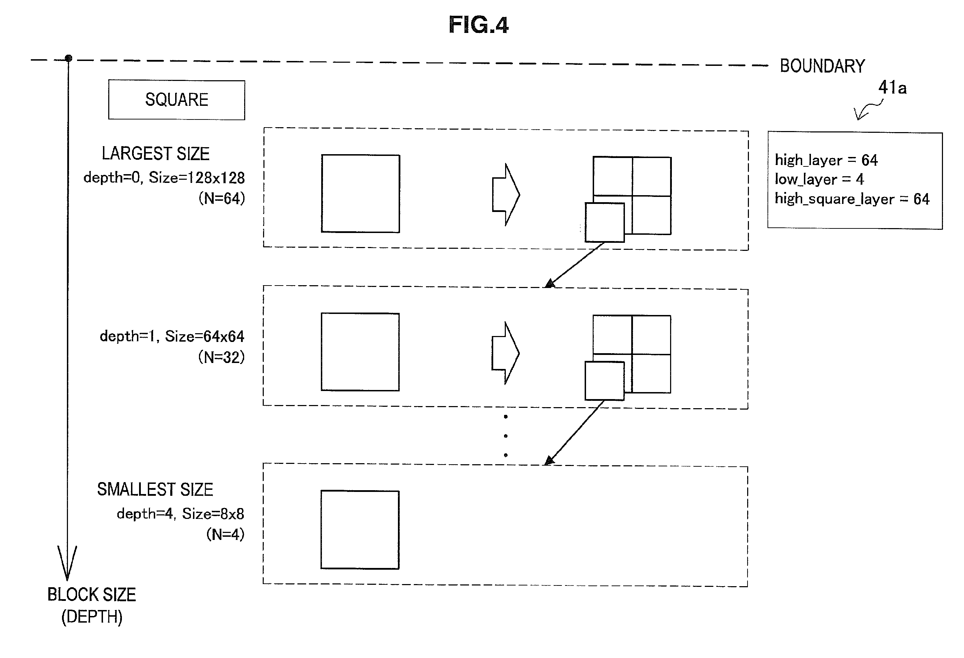

Fig. 4 is an explanatory diagram showing a first example of a hierarchical structure of a coded block that can be defined by the first embodiment. In the example of Fig. 4, the definition information 41a indicates that "high_layer" is 64, "low_layer" is 4, and "high_square_layer" is 64. In this case, since "high_square_layer" and "high_layer" are equal, the blocks at all the depths (of all the sizes) are squares. That is, as shown in Fig. 4, a block of largest size (128x128) at a depth zero, a block of the second size (64x64) at a depth one, and a block of the smallest size (8x8) at a depth four are all squares.

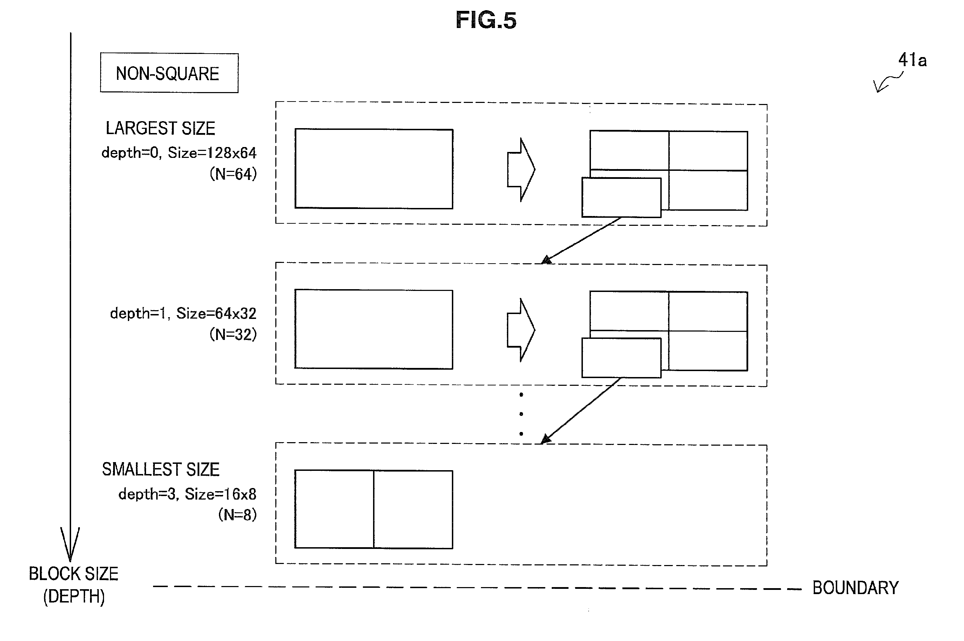

Fig. 5 is an explanatory diagram showing a second example of the hierarchical structure of a coded block that can be defined by the first embodiment. In the example of Fig. 5, the definition information 41a indicates that "high_layer" is 64, "low_layer" is 8, and "high_square_layer" is -1. In this case, since "high_square_layer" is smaller than "low_layer", the blocks at all the depths (of all the sizes) are non-squares. That is, as shown in Fig. 5, a block of largest size (128x64) at a depth (the number of times of partitioning) zero, a block of the second size (64x32) at a depth one, and a block of the smallest size (16x8) at a depth three are all non-squares.

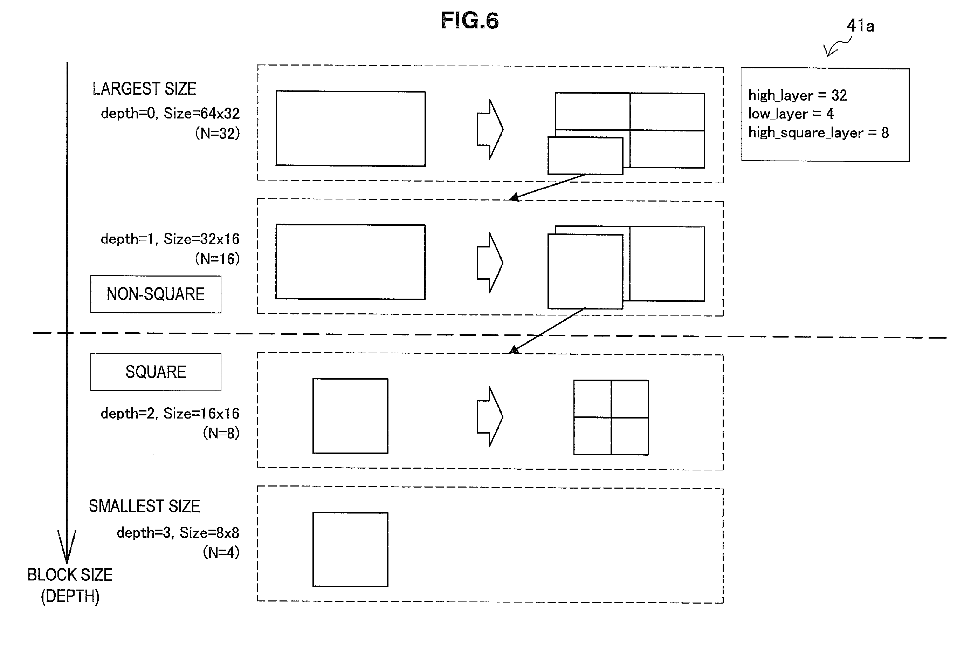

Fig. 6 is an explanatory diagram showing a third example of the hierarchical structure of a coded block that can be defined by the first embodiment. In the example of Fig. 6, the definition information 41a indicates that "high_layer" is 32, "low_layer" is 4, and "high_square_layer" is 8. In this case, both a non-square block and a square block can be set according to the block size. That is, as shown in Fig. 6, a block of the largest size (64x32) at a depth zero and a block of the second size (32x16) at a depth one are non-squares. Also, a block of the third size (16x16) at a depth two and a block of the smallest size (8x8) at a depth three are squares.

Additionally, as can be understood from Figs. 4 to 6, in the case of partitioning a block without changing the shape of the block (for example, in the case the shapes of blocks before and after partitioning are both rectangles or both squares), a block is partitioned into four with the center lines in the vertical direction and the horizontal direction as the separations, for example. On the other hand, in the case a rectangular block is to be partitioned into square blocks across the boundary value indicated by "high_square_layer", the block may be partitioned into two with the line in the vertical direction as the separation (four, in the case the ratio of the long side to the short side is four to one), for example.

(Prediction Unit: Square Block)

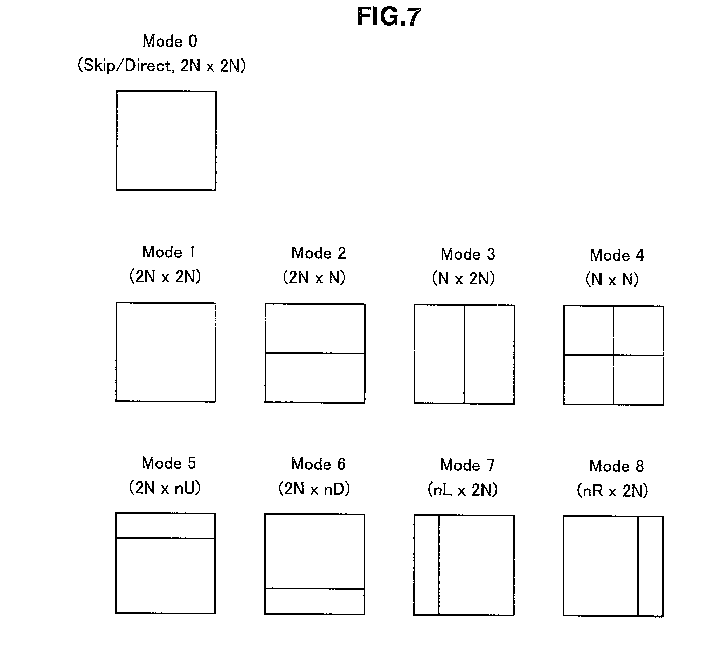

Fig. 7 is an explanatory diagram for describing arrangement of prediction units in a block having a 2Nx2N shape, that is, a square block. Referring to Fig. 7, nine types of prediction modes, from Mode 0 to Mode 8, are illustrated.
Among these, Mode 0 is a distinct prediction mode that is selected in a case a skipped macro block mode or a direct mode is used. In Mode 0, one prediction unit of size 2Nx2N is arranged in the block. Mode 1 is a prediction mode in which one prediction unit of size 2Nx2N is arranged in the block. Mode 2 is a prediction mode in which two prediction units of size 2NxN are arranged vertically in the block. Mode 3 is a prediction mode in which two prediction units of size Nx2N are arranged horizontally in the block. Mode 4 is a prediction mode in which four prediction units of size NxN are arranged, two in the vertical direction and two in the horizontal direction, in the block. These Modes 0 to 4 are prediction modes adopted by H264/AVC.

Mode 5 is a prediction mode in which two prediction units of size 2NxnU (N/2, 3N/2) are arranged vertically in the block. Mode 6 is a prediction mode in which the arrangement of the prediction units of Mode 5 is flipped vertically. Mode 7 is a prediction mode in which two prediction units of size nL(N/2, 3N/2)x2N are arranged horizontally in the block. Mode 8 is a prediction mode in which the arrangement of the prediction units of Mode 7 is flipped horizontally. These Modes 5 to 8 may also be used as the candidates for the prediction mode with respect to a square block.

(Prediction Unit: Two-to-One Rectangular Block)

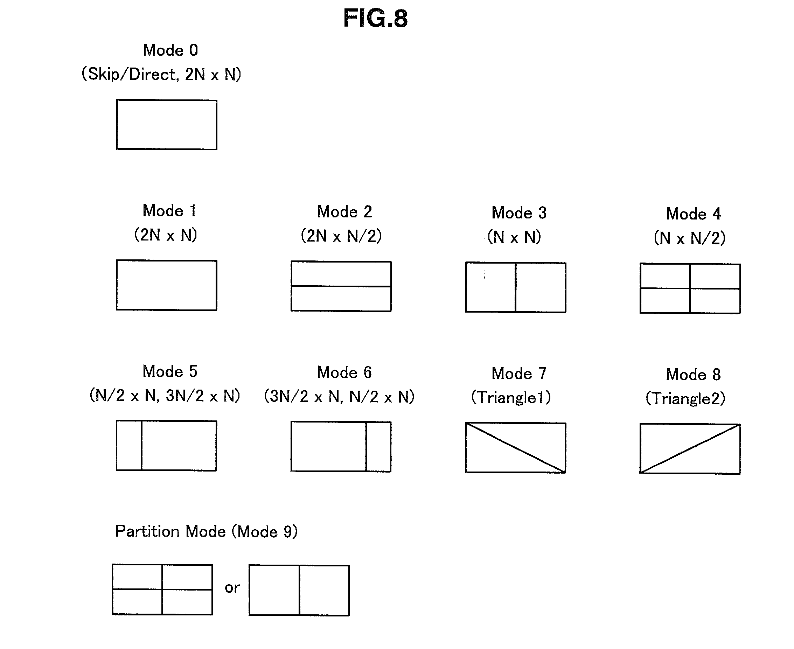

Fig. 8 is an explanatory diagram for describing the arrangement of the prediction units in a block having a shape of a rectangle whose ratio of a long side to a short side is 2 : 1. Referring to Fig. 8, nine types of prediction modes, from Mode 0 to Mode 8, are illustrated. Also, a partition mode is shown as Mode 9.

Among these, Mode 0 is a distinct prediction mode that is selected in a case a skipped macro block mode or a direct mode is used. In Mode 0, one prediction unit of size 2NxN is arranged in the block. Mode 1 is a prediction mode in which one prediction unit of size 2NxN is arranged in the block. Mode 2 is a prediction mode in which two prediction units of size $2N \times N/2$ are arranged vertically in the block. Mode 3 is a prediction mode in which two prediction units of size $N \times N$ are arranged horizontally in the block. Mode 4 is a prediction mode in which four prediction units of size $N \times N/2$ are arranged, two in the vertical direction and two in the horizontal direction, in the block. Mode 5 is a prediction mode in which two prediction units of size $N/2 \times N$ and $3N/2 \times N$ are arranged horizontally in the block. Mode 6 is a prediction mode in which the arrangement of the prediction units of Mode 5 is flipped horizontally. Mode 7 and Mode 8 are prediction modes in which two triangular prediction units which are separated by a diagonal line of the block are arranged in the block.

Mode 9 is a partition mode indicating that a block is to be further partitioned. In the case the partition mode is indicated as the prediction mode for a block at a certain depth, the block is partitioned into a smaller blocks. Accordingly, the number of partition modes specified for a certain block of the largest size represents the number of times of partitioning from the block of the largest size. This means that the number of partition modes serves as the size specification information specifying the size of a block set in an image. Additionally, in the explanation in the present specification, the size specification information and the prediction mode information are distinguished from each other, but the size specification information may also be treated as a part of the prediction mode information. Additionally, as described above, in the case of partitionining a block without changing the shape of the block, the block may be partitioned into four with the center lines in the vertical direction and the horizontal direction as the separations, for example. On the other hand, in the case a rectangular block is to be partitioned into square blocks across the boundary value indicated by "high_square_layer", the block may be partitioned with the line in the vertical direction as the separation, for example.

(Estimation Range for Motion Vector)

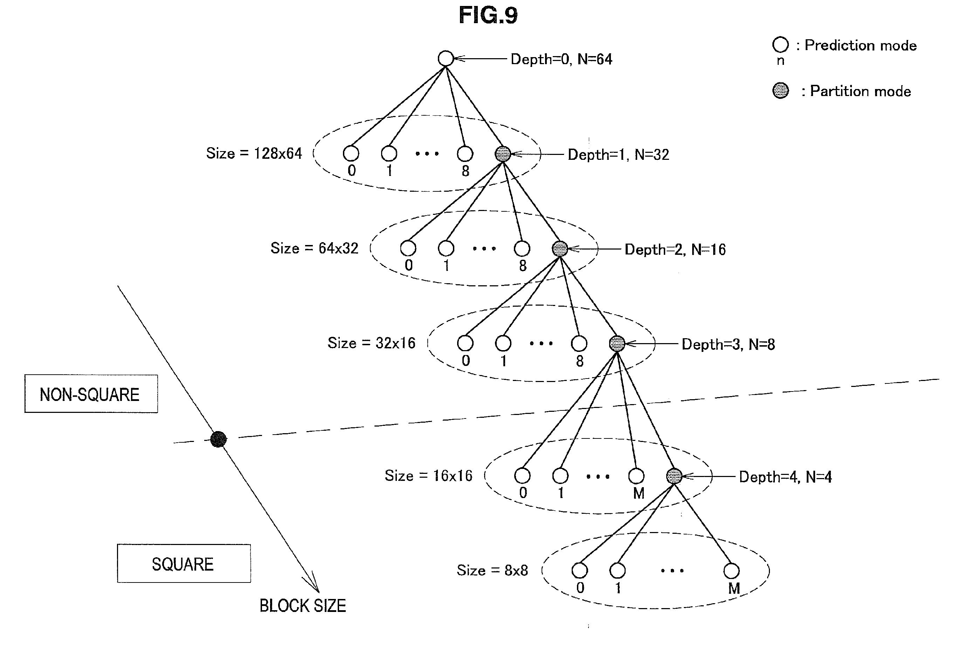

Fig. 9 is an explanatory diagram for describing an estimation range for a motion vector in the first embodiment of the shape determination information.

Referring to Fig. 9, a tree structure showing an estimation range for a motion vector in a case of "high_layer" = 64, "low_layer" = 4, and "high_square_layer" = 8 is shown. A first layer at the highest level of the tree structure includes nine prediction modes, from Mode 0 to Mode 8, that may be applied to a non-square block of largest size of 128x64 pixels. Also, a second layer following the first layer includes nine prediction modes, from Mode 0 to Mode 8, that may be applied to a non-square block of size of 64x32 pixels. Furthermore, a third layer following the second layer includes nine prediction modes, from Mode 0 to Mode 8, that may be applied to a non-square block of size of $32 \times 16$ pixels. A fourth layer following the third layer includes prediction modes from Mode 0 to Mode M that may be applied to a square block of size of 16x16 pixels. A fifth layer following the fourth layer includes prediction modes from Mode 0 to Mode M that may be applied to a square block of smallest size of 8x8 pixels.

The motion vector setting section 43 of the motion estimation section 40 shown in Fig. 2 estimates a motion vector according to the shape of a block of each block size determined by the shape determination section 42, taking every prediction mode of the first layer to the fifth layer included in such tree structure as the target. Then, the motion vector setting section 43 selects a prediction mode by which the cost function value is the smallest within an estimation range as a prediction mode for identifying the arrangement of prediction units to be used for encoding. Such an optimal prediction mode is uniquely identified by the number of a prediction mode and the depth of a layer as illustrated in Fig. 7 or 8. The depth indicates the number of times of partitioning from a block of the largest size, and is information specifying the size of a block after partitioning. The number of a prediction mode and the depth are multiplexed, as the prediction mode information and the size specification information, within a block header of an encoded stream, for example. Also, the largest size information and the shape determination information are multiplexed within a sequence parameter set, a picture parameter set or a slice header of an encoded stream, for example. Therefore, a device that decodes an encoded image can recognize the size, the shape, and the arrangement of the prediction units of a block used at the time of encoding, by acquiring these pieces of multiplexed information from the encoded stream.

(Transform Unit: Two-to-One Rectangular Block)

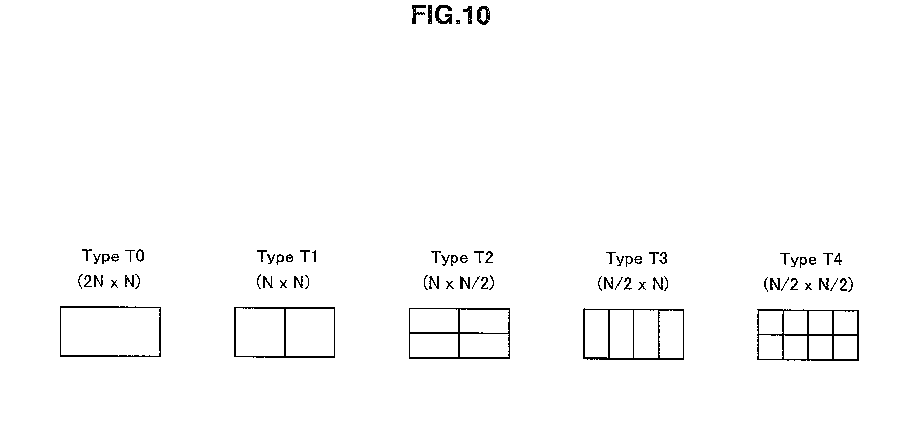

Fig. 10 is an explanatory diagram for describing arrangement of transform units (TU), which are units of an orthogonal transform process, in a block having a 2NxN shape.

Referring to Fig. 10, five arrangement patterns of transform units from type T0 to type T4 are shown. Among these, type T0 is a pattern of arranging one transform unit of size 2NxN in a block having a 2NxN shape. Type T1 is a pattern of horizontally arranging two transform units of size N×N next to each other in the block. Type T2 is a pattern of arranging four transform units of size N×N/2 in the block, two arranged next to each other in the vertical direction and two arranged next to each other in the horizontal direction. Type T3 is a pattern of arranging four transform units of size N/2×N next to each other in the horizontal direction in the block. Type T4 is a pattern of arranging eight transform units of size N/2xN/2, two arranged next to each other in the vertical direction and four arranged next to each other in the horizontal direction. The orthogonal transform section 14 performs orthogonal transform for each transform unit of any of these five types, for example, and outputs a transform coefficient data.

Table 1 shows a mapping of the prediction units (PU) illustrated in Fig. 8 and the transform units (TU) illustrated in Fig. 10. The "O" in Table 1 indicates that if a prediction unit in the left column is selected, the corresponding transform unit may be used. The "×" indicates that if a prediction unit in the left column is selected, the corresponding transform unit may not be used.

[Table 1]

Table 1. Mapping of Prediction Unit (PU) and Transform Unit (TU) (Ratio: 2 to 1)

| PU \ TU | T0 | T1 | T2 | T3 | T4 |
|---|---|---|---|---|---|
| Mode0: 2N x N | ○ | ○ | × | × | × |
| Mode1: 2N x N | ○ | ○ | × | × | × |
| Mode2: 2N x N/2 | × | × | ○ | × | ○ |
| Mode3: N x N | × | ○ | ○ | ○ | ○ |
| Mode4: N x N/2 | × | × | ○ | ○ | ○ |
| Mode5: N/2, 3N/2 x N | × | × | × | ○ | ○ |
| Mode6: 3N/2, N/2 x N | × | × | × | ○ | ○ |
| Mode7: Triengle1 | ○ | ○ | ○ | ○ | ○ |
| Mode8: Triangle2 | ○ | ○ | ○ | ○ | ○ |

Additionally, generally, the units of orthogonal transform may be units of 32x32 pixels at the largest to allow execution. Accordingly, it should be noted that even if "O" is assigned in Table 1, a transform unit that cannot be used may possibly exist depending on the block size.

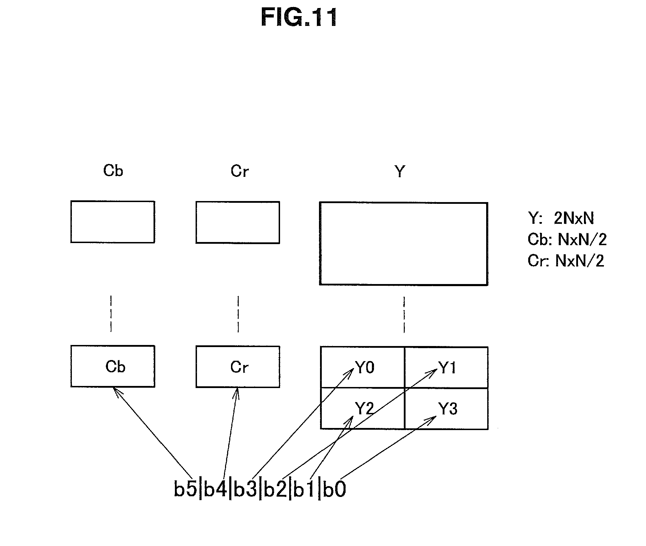

Fig. 11 is an explanatory diagram showing an example of a coded block pattern (CBP) with respect to a transform unit having a 2NxN shape. In the case of performing orthogonal transform with a transform unit having a 2NxN shape, whereas transform coefficients of 2NxN are generated from a luma signal (Y), transform coefficients of N×N/2 are respectively generated from chroma signals (Cb, Cr), for example. In this case, the transform coefficients of the luma signal (Y) are grouped into four groups (Y0, Y1, Y2, and Y3), for example, and four bits (b0, b1, b2, and b3) are assigned to respective groups. Also, one bit (b4 or b5) is assigned to each of the transform coefficients of the chroma signals (Cb, Cr). Whether a significant transform coefficient other than a DC value is generated or not can thereby be indicated by the value of each bit.

(Summary of First Embodiment)

According to the first embodiment described above, the shape determination information includes information about a boundary value of a size of a block that separates a square block from a non-square block. Then, the shape determination section 42 determines that the shape of a block having a size larger than the boundary value is a non-square and that the shape of a block having a size smaller than the boundary value is a square. By allowing such stepwise definition of a block shape, a method that handles larger sizs such as 32x16 pixels, or 64x32 pixels and 32x16 pixels can be adopted while supporting the H.264/AVC method according to which the largest macro block is a square of 16x16 pixels, for example.

Furthermore, the shapes of these blocks of larger sizes are rectangles. Therefore, by making the size of a line memory required for image processing the same as the size of the shorter sides, increase in the line memory accompanying the extension of a block size can be can be prevented.

Also, the largest size information and the smallest size information described above are already usable in the H.264/AVC method and the like, and the only information to be newly defined in the first embodiment is "high_square_layer", which is the shape determination information. Accordingly, the framework of such a new block size can be easily introduced, and the possibility of the compression ratio decreasing due to the increase in the header information is small.

[2-2. Second Embodiment]

(Explanation on Data)

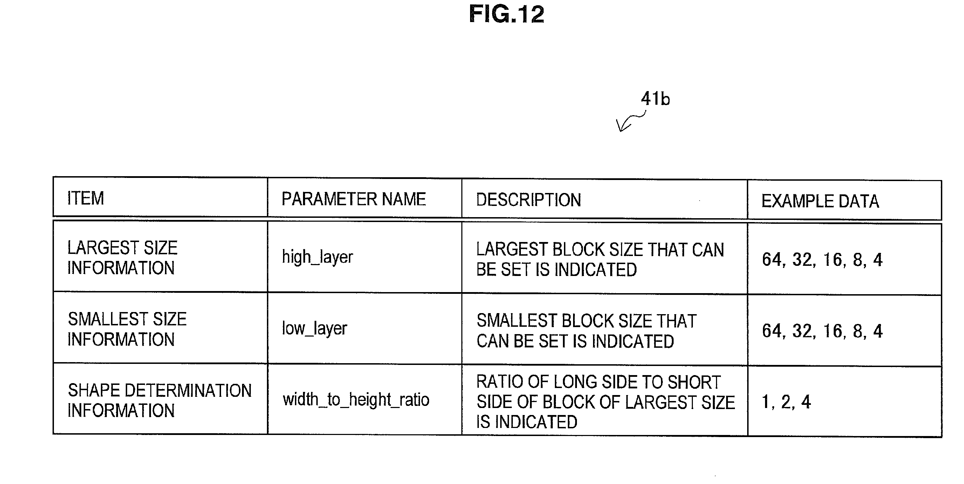

Fig. 12 is an explanatory diagram for describing a second embodiment of the shape determination information. Referring to Fig. 12, definition information 41b which may be held by the information holding section 41 in the second embodiment is shown. The definition information 41b includes largest size information "high_layer", smallest size information "low_layer" and shape determination information "width_to_height_ratio".

The "width_to_height_ratio", which is the shape determination information according to the present embodiment, indicates the ratio of a long side to a short side of a block of largest size. The value of "width_to_height_ratio" may be 1, 2 or 4, for example. In the case one is specified as the value of "width_to_height_ratio", only a square block can be set in an image. On the other hand, in the case a value other than one is specified as the value of "width_to_height_ratio", the shape of the block of largest size will be a rectangle.

In the present embodiment, the shape of a block of largest size is assumed to be a square or a rectangle, and the shape of a block of smaller size is assumed to be a square. The semantics of the definition information 41b is shown below:

[Math. 2]

```
If width_to_height_ratio = 1        // there are only Square layers
      HighSQsize = high_layer
      LowSQsize = low_layer
Else                    // there will be both Non-Square and Square layers
      HighNSsize = high_layer
      LowNSsize = HighNSsize
      HighSQsize = high_layer / 2
      LowSQsize = low_layer
```

(Hierarchical Structure of Coded Block)

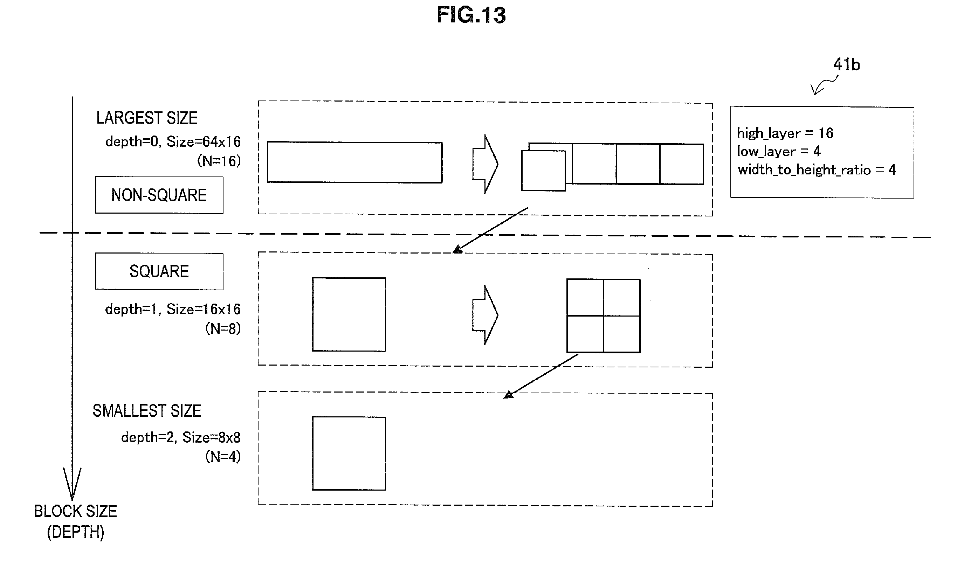

Fig. 13 is an explanatory diagram showing an example of a hierarchical structure of a coded block that may be defined by the second embodiment. In the example of Fig. 13, the definition information 41b indicates that "high_layer" is 16, "low_layer" is 4, and "width_to_height_ratio" is 4. In this case, both a non-square block and a square block may be set depending on the block size. That is, as shown in Fig. 13, a block of largest size (64×16) at a depth zero is a rectangle with the ratio of a long side to a short size being four (four to one). Also, the shape of each of blocks at a depth of one or more is a rectangle.

(Prediction Unit : Four-to-One Rectangular Block)

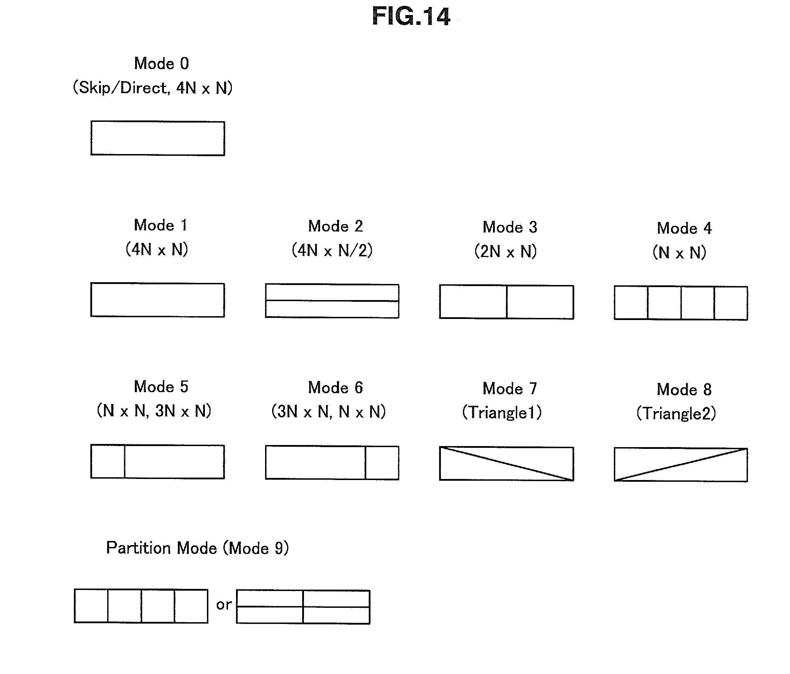

Fig. 14 is an explanatory diagram for describing arrangement of prediction units in a block of a rectangular shape whose ratio of a long side to a short side is four to one. Referring to Fig. 14, nine types of prediction modes, from Mode 0 to Mode 8, are illustrated. Also, a partition mode is shown as Mode 9.

Among these, Mode 0 is a distinct prediction mode that is selected in a case a skipped macro block mode or a direct mode is used. In Mode 0, one prediction unit of size 4NxN is arranged in the block. Mode 1 is a prediction mode in which one prediction unit of size 4NxN is arranged in the block. Mode 2 is a prediction mode in which two prediction units of size $4N \times N/2$ are arranged vertically in the block. Mode 3 is a prediction mode in which two prediction units of size 2NxN are arranged horizontally in the block. Mode 4 is a prediction mode in which four prediction units of size $N \times N$ are arranged horizontally in the block. Mode 6 is a prediction mode in which the arrangement of the prediction units of Mode 5 is flipped horizontally. Mode 7 and Mode 8 are prediction modes in which two triangular prediction units which are separated by a diagonal line of the block are arranged in the block.

Mode 9 is a partition mode indicating that a block is to be further partitioned. In the example of Fig. 13, the four-to-one rectangular block is partitioned into four square blocks with three vertical, equally distanced lines as the separations. Also, in the case rectangular blocks may be set over a plurality of layers, the four-to-one rectangular block may be partitioned into four with the center lines in the vertical direction and the horizontal direction as the separations, for example.

Also in the present embodiment, the motion vector setting section 43 of the motion estimation section 40 may estimate a motion vector, taking every prediction mode of every layer included in the hierarchical structure illustrated in Fig. 13, for example, as the target.

(Transform Unit: Four-to-One Rectangular Block)

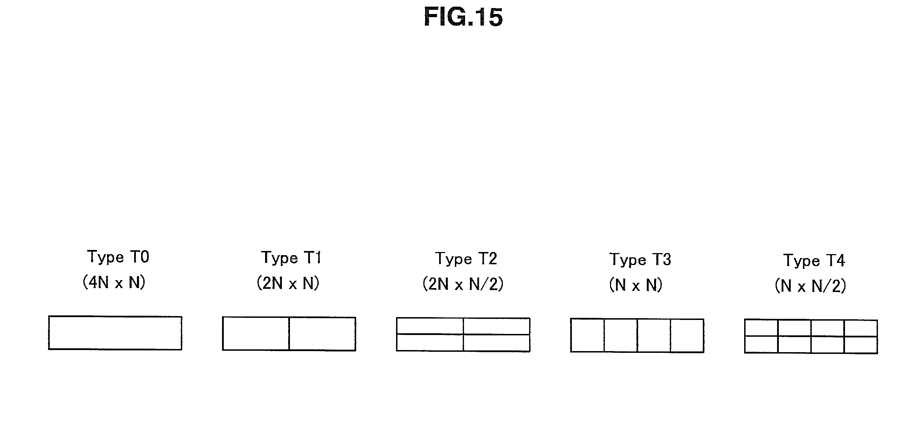

Fig. 15 is an explanatory diagram for describing arrangement of transform units (TU), which are units of an orthogonal transform process, in a block having a 4NxN shape.

Referring to Fig. 15, five arrangement patterns of transform units from type T0 to type T4 are shown. Among these, type T0 is a pattern of arranging one transform unit of size 4NxN in a block having a 4NxN shape. Type T1 is a pattern of horizontally arranging two transform units of size 2NxN next to each other in the block. Type T2 is a pattern of arranging four transform units of size 2NxN/2 in the block, two arranged next to each other in the vertical direction and two arranged next to each other in the horizontal direction,. Type T3 is a pattern of arranging four transform units of size $N \times N$ next to each other in the horizontal direction in the block. Type T4 is a pattern of arranging eight transform units of size $N \times N/2$, two arranged next to each other in the vertical direction and four arranged next to each other in the horizontal direction. The orthogonal transform section 14 performs orthogonal transform for each transform unit of any of these five types, for example, and outputs a transform coefficient data.

Table 2 shows a mapping of the prediction units (PU) illustrated in Fig. 14 and the transform units (TU) illustrated in Fig. 15.

[Table 2]

Table 2. Mapping of Prediction Unit (PU) and Transform Unit (TU) (Ratio: 4 to 1)

| PU \ TU | T0 | T1 | T2 | T3 | T4 |
|---|---|---|---|---|---|
| Mode0: 4N x N | ○ | ○ | × | × | × |
| Mode1: 4N x N | ○ | ○ | × | × | × |
| Mode2: 4N x N/2 | × | × | ○ | × | ○ |
| Mode3: 2N x N | × | ○ | ○ | ○ | ○ |
| Mode4: N x N | × | × | ○ | ○ | ○ |
| Mode5:N, 3N x N | × | × | × | ○ | ○ |
| Mode6:3N, N x N | × | × | × | ○ | ○ |
| Mode7:Triangle 1 | ○ | ○ | ○ | ○ | ○ |
| Mode8: Triangle2 | ○ | ○ | ○ | ○ | ○ |

Additionally, as in the case of a two-to one rectangular block, it should be noted that even if "O" is assigned in Table 2, a transform unit that cannot be used may possibly exist depending on the block size.

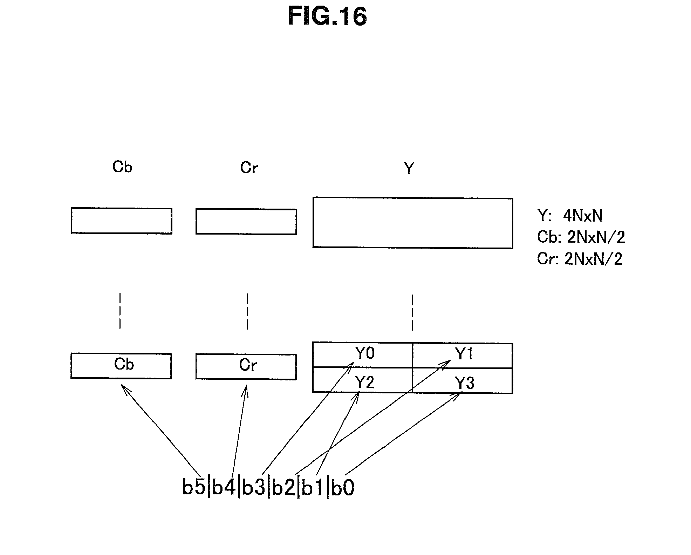

Fig. 16 is an explanatory diagram showing an example of a coded block pattern (CBP) with respect to a transform unit having a 4NxN shape. In the case of performing orthogonal transform with a transform unit having a 4NxN shape, whereas transform coefficients of 4NxN are generated from a luma signal (Y), transform coefficients of 2NxN/2 are respectively generated from chroma signals (Cb, Cr), for example. In this case, the transform coefficients of the luma signal (Y) are grouped into four groups (Y0, Y1, Y2, and Y3), for example, and four bits (b0, b1, b2, and b3) are assigned to respective groups. Also, one bit (b4 or b5) is assigned to each of the transform coefficients of the chroma signals (Cb, Cr). Whether a significant transform coefficient other than a DC value is generated or not can thereby be indicated by the value of each bit.

(Summary of Second Embodiment)

According to the second embodiment described above, the shape of each block in an image is a square or a rectangle, and the shape determination information includes ratio information defining the ratio of a long side to a short side of a block. The shape of a block of largest size may be determined based on the ratio information. By allowing such stepwise definition of a block shape, a method that handles larger sizes such as 32x16 pixels, $64 \times 16$ pixels and the like can be adopted while supporting the H.264/AVC method according to which the largest macro block is a square of 16x16 pixels, for example.

Furthermore, according to the second embodiment, the ratio of a long side to a short side regarding a rectangular block can be specified by a user, and thus, it is possible to flexibly meet various needs of the user regarding the size of a line memory, the compression ratio, and the image quality.

Furthermore, also in the second embodiment, the only information to be newly defined is "width_to_height_ ratio", which is the shape determination information. Accordingly, the framework of such a new block size can be easily introduced, and the decrease in the compression ratio due to the increase in the header information can be prevented.

Additionally, both "high_square_layer" according to the first embodiment and "width_to_height_ratio" according to the second embodiment may be used as the shape determination information. In this case, a user can flexibly specify the number of layers and the shape of a rectangular block, for example.

[2-3.Third Embodiment]

(Explanation on Data)

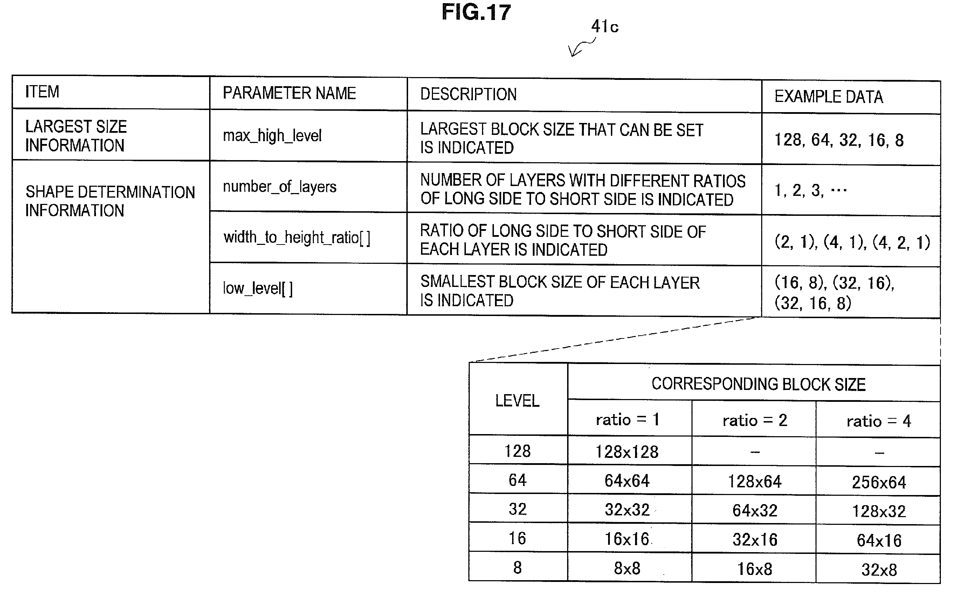

Fig. 17 is an explanatory diagram for describing a third embodiment of the shape determination information. Referring to Fig. 17, definition information 41c which may be held by the information holding section 41 in the third embodiment is shown. The definition information 41c includes, in addition to largest size information "max_high_level", three data items, "number_of_layers", "width_to_height_ratio[]" and "low_level[]", as the shape determination information.

The largest size information "max_high_level" indicates the size of a largest block that can be set in an image. The value of the largest size information is, for example, 128, 64, 32, 16 or 8.

The "number_of_layers" indicates the number of layers with different ratios of a long side to a short side included in the hierarchical structure of a coded block. For example, if the shapes of blocks of all the layers are the same in the hierarchical structure of a coded block, the value of "number_of_layers" is one. Also, as with the hierarchical structure illustrated in Fig. 13, in the case there is a layer where the ratio of a long side to a short side is four (four to one) and there is a layer where the ratio of a long side to a short side is one, the value of "number_of_layers" is two.

The "width_to_height_ratio[]" is a data array indicating the ratio of each of the layers with different ratios of a long side to a short side of a block. The number of elements of the array is equal to the value of "number_of_layers". For example, in the case the ratio in the first layer is four and the ratio in the second layer is one, as in the hierarchical structure illustrated in Fig. 13, the contents of "width_to_height_ratio[]" are (4, 1), that is, width_to_height_ratio[1] is four and width_to_height_ratio[2] is one.

The "low_level[]" is a data array indicating the smallest block size to which each ratio defined by "width_to_ height_ratio[]" is applied. The number of elements of the array is equal to the value of "number_of_layers".

The semantics of the definition information 41c is shown below. Additionally, in the semantics below, High_level [k] and low_level[k] are variables indicating the level of the layer of the largest size and the level of layer of the smallest size, respectively, in a k-th layer group with different ratios.

[Math. 3]

```
high_level[1] = max_high_level
low_level[1] is obtained from the bitstream
ratio[1] = width_to_hight_ratio[1]
For i = 2..number_of_layers
    High_level[i] = low_level[i-1]
    low_level[i] is obtained from the bitstream
    ratio[i] = width_to_hight_ratio[i]
Next
```

(Hierarchical Structure of Coded Block)

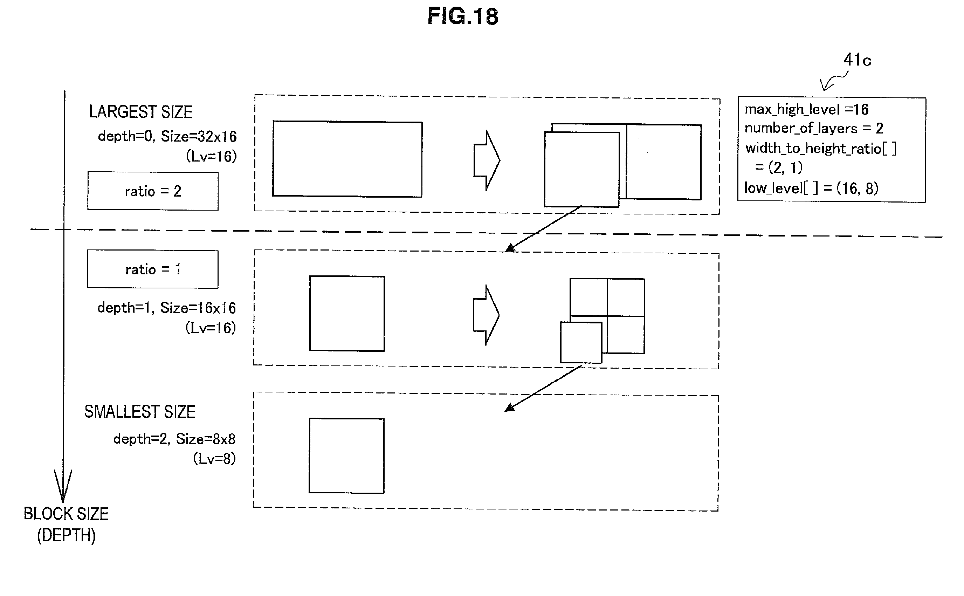

Fig. 18 is an explanatory diagram showing a first example of the hierarchical structure of a coded block that can be defined by the third embodiment. In the example of Fig. 18, the definition information 41c indicates that "max_high_level" is 16, "number_of_layers" is 2, "width_to_height_ratio[]" is (2,1), and "low_level[]" is (16,8). In this case, two layer groups with different ratios may be set according to the block sizes. That is, as shown in Fig. 18, a block of largest size (32x16) at a depth zero is a rectangle whose ratio of a long side to a short side is two. Also, each block of a size at a depth of one or more is a square.

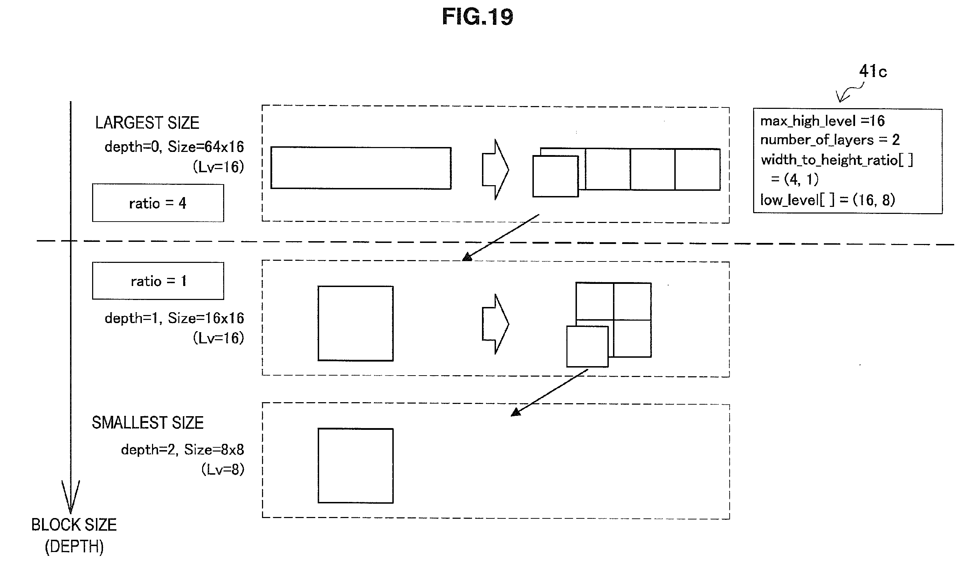

Fig. 19 is an explanatory diagram showing a second example of the hierarchical structure of a coded block that can be defined by the third embodiment. In the example of Fig. 19, the definition information 41c indicates that "max_high_level" is 16, "number_of_layers" is 2, "width_to_height_ratio[]" is (4,1), and "low_level[]" is (16,8). In this case, two layer groups with different ratios may be set according to the block sizes. That is, as shown in Fig. 19, a block of largest size $(64\times16)$ at a depth zero is a rectangle whose ratio of a long side to a short side is four. Also, each block of a size at a depth of one or more is a square.

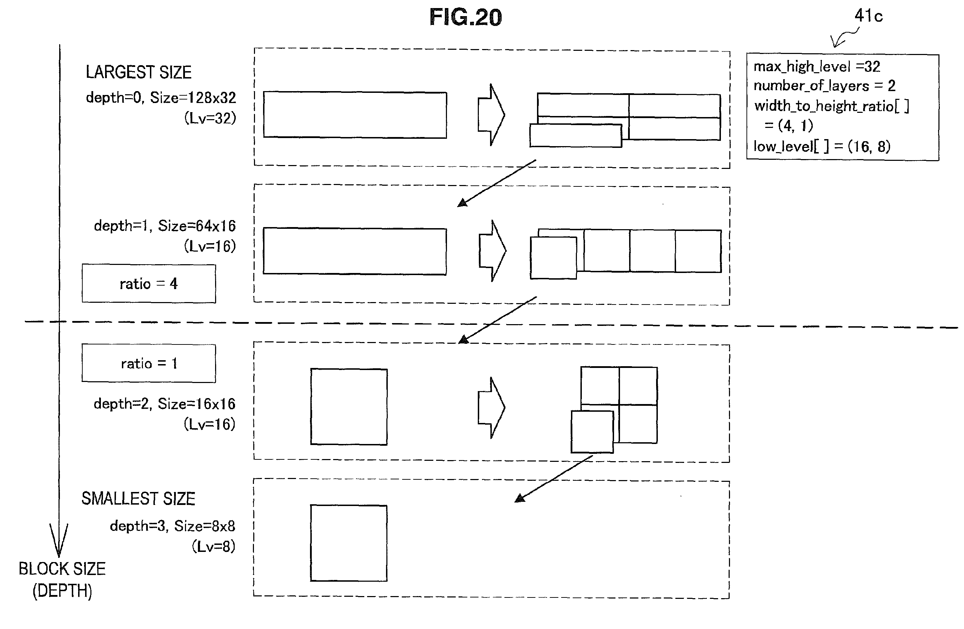

Fig. 20 is an explanatory diagram showing a third example of the hierarchical structure of a coded block that can be defined by the third embodiment. In the example of Fig. 20, the definition information 41c indicates that "max_high_level" is 32, "number_of_layers" is 2, "width_to_height_ratio[]" is (4,1), and "low_level[]" is (16,8). In this case, two layer groups with different ratios may be set according to the block sizes. That is, as shown in Fig. 20, a block of largest size (128x32) at a depth zero and a block of a second size $(64\times16)$ at a depth one are rectangles whose ratios of a long side to a short side are four. Also, each block of a size at a depth of two or more is a square.

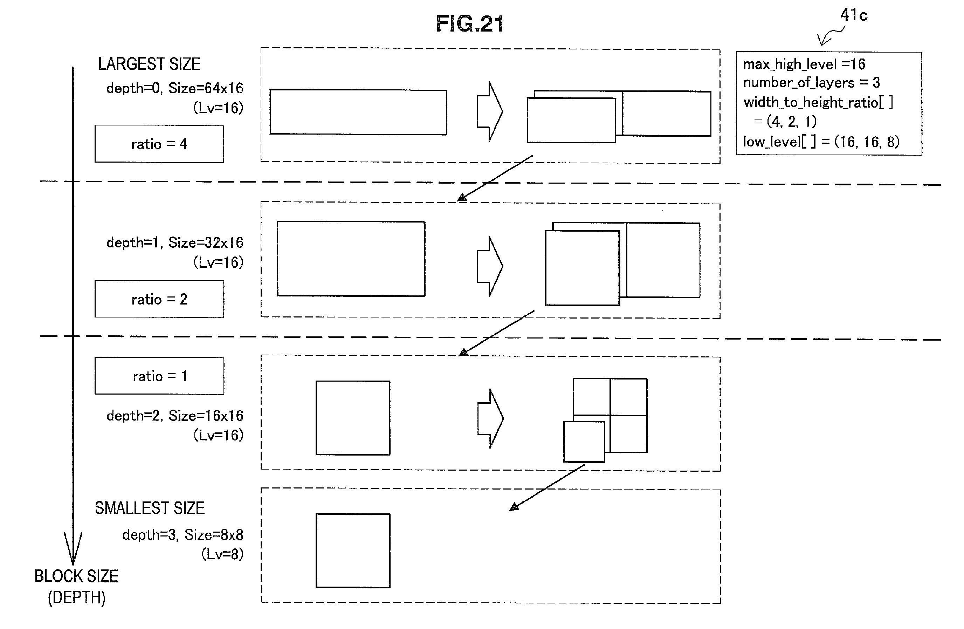

Fig. 21 is an explanatory diagram showing a fourth example of the hierarchical structure of a coded block that can be defined by the third embodiment. In the example of Fig. 21, the definition information 41c indicates that "max_high_level" is 16, "number_of_layers" is 3, "width_to_height_ratio[]" is (4,2,1), and "low_level[]" is (16,16,8). In this case, three layer groups with different ratios may be set according to the block sizes. That is, as shown in Fig. 21, a block of largest size (64x16) at a depth zero is a rectangle whose ratio of a long side to a short side is four. A block of a second size (32x16) at a depth one is a rectangle whose ratio of a long side to a short side is two. Also, each block of a size at a depth of two or more is a square.

Additionally, as can be seen from Figs. 18 to 21, in the case of partitioning a block without changing the shape of the block, the block may be partitioned into four with the center lines in the vertical direction and the horizontal direction as the separations, as in the first embodiment. On the other hand, in the case of partitioning the block so as to shift from one layer group to another layer group with a different ratio, the block may be partitioned into two or four with a line in the vertical direction as the separation, for example.

Also in the present embodiment, the motion vector setting section 43 of the motion estimation section 40 may estimate a motion vector, taking every prediction mode of every layer included in the hierarchical structure as the target.

(Summary of Third Embodiment)

According to the third embodiment described above, the shape of each block in an image is a square or a rectangle, and the shape determination information includes number-of-layers information defining the number of layers whose ratios of a long side to a short side of a block are different from one another and information defining the ratio for each layer. By allowing such stepwise definition of a block shape, blocks of various sizes with various ratios of a long side to a short side may be handled while supporting the H.264/AVC method according to which the largest macro block is a square of 16x16 pixels, for example.

Furthermore, according to the third embodiment, a plurality of ratios of a long side to a short side regarding a rectangular block can be specified, and thus, the flexibility at the time of designing an image processing device while taking into account the size of a line memory, the compression ratio, the image quality and the like is further increased.

<3. Flow of Process at the Time of Encoding According to an Embodiment>

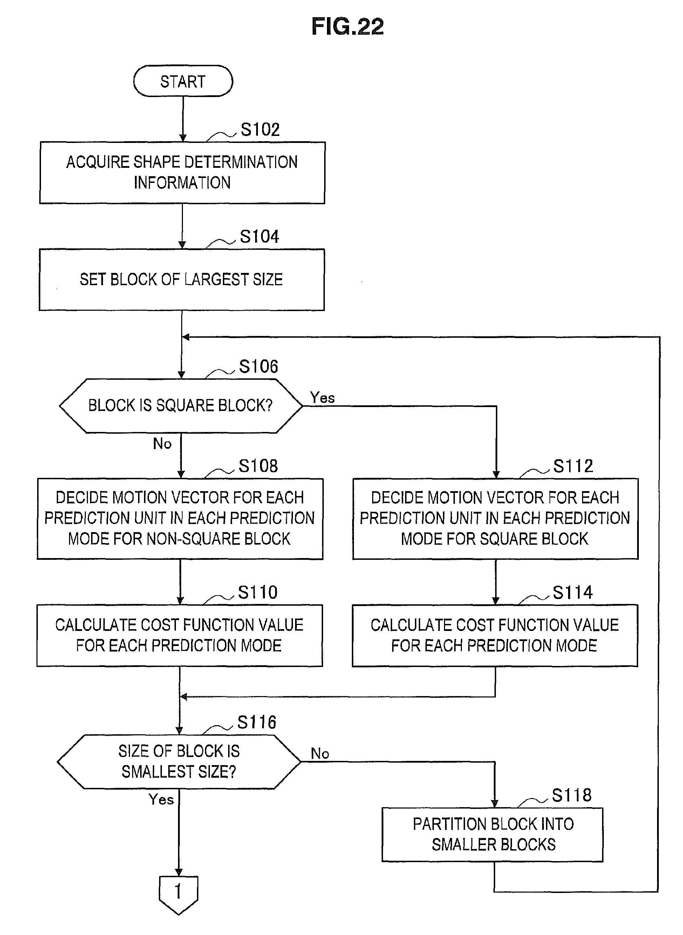

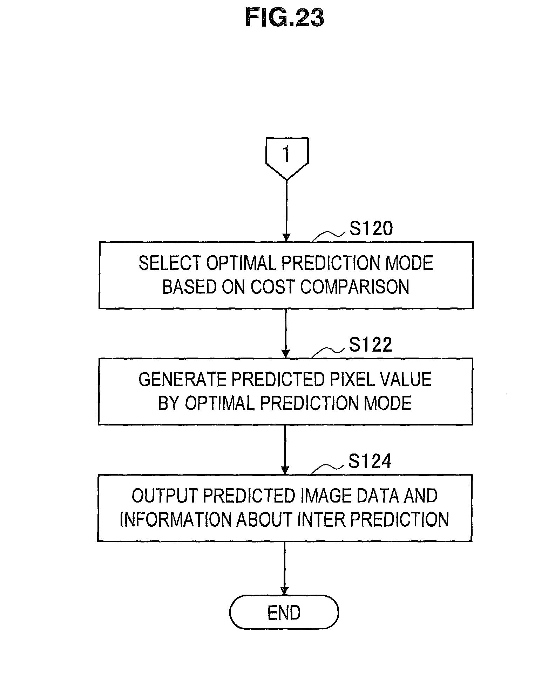

Next, a flow of a process at the time of encoding will be described using Figs. 22 and 23. Figs. 22 and 23 are flow charts showing an example of a motion estimation process of the motion estimation section 40 of the image encoding device 10 according to the present embodiment.

Referring to Fig. 22, first, the shape determination section 42 acquires the shape determination information from the information holding section 41 (step S102). The shape determination information acquired here may be "high_square_layer" illustrated in Fig. 3, "width_to_height_ratio" illustrated in Fig. 12, or "number_of_layers","width_to_ height_ratio[]" and "low_level[]" illustrated in Fig. 17, for example. The shape determination section 42 also acquires information such as the largest size information, the smallest size information and the like from the information holding section 41.

Next, the shape determination section 42 sets in an image a block of largest size that can be set (step S104).

Then, the shape determination section 42 determines, based on the acquired shape determination information and the size of a block that is currently set, whether or not the shape of the block is a square (step S106). For example, in the case the definition information 41a illustrated in Fig. 4 is defined and the size of the block is 128x128 pixels (N = 64), the shape of the block is determined to be a square. Also, for example, in the case the definition information 41a illustrated in Fig. 6 is defined and the size of the block is 64x32 pixels (N = 32), the shape of the block is determined to be not a square. In the case the shape of the block is determined to be not a square, the process proceeds to step S108. On the other hand, in the case the shape of the block is determined to be a square, the process proceeds to step S112.

In step S108, the motion vector setting section 43 arranges prediction unit(s) in the block in each prediction mode for a non-square block, and decides a motion vector for each arranged prediction unit (step S108). The prediction modes used here may be the nine types of prediction modes illustrated in Fig. 8 in a case the shape of the block is a two-to-one rectangle, and the nine types of prediction modes illustrated in Fig. 14 in a case the shape of the block is a four-to-one rectangle. Next, the motion vector setting section 43 calculates a cost function value for each prediction mode (step S110). Additionally, the motion vector decided in step S108 is a provisional motion vector for selecting the arrangement of prediction unit(s) (that is, the optimal prediction mode) to be set for generation of a predicted pixel value of the block.

In step S112, the motion vector setting section 43 arranges prediction unit(s) in the block in each prediction mode for a square block, and decides a motion vector for each arranged prediction unit (step S112). The prediction modes used here may be the nine types of prediction modes illustrated in Fig. 7, for example. Next, the motion vector setting section 43 calculates a cost function value for each prediction mode (step S114). Additionally, the motion vector decided in step S112 is also a provisional motion vector for selecting the optimal prediction mode.

Next, the motion vector setting section 43 determines whether or not the size of the block is the smallest size that can be set (step S 116). In the case the size of the block is not the smallest size here, the process proceeds to step S118. On the other hand, in the case the size of the block is the smallest size, the process proceeds to step S120.

In step S118, the motion vector setting section 43 partitions the block into a plurality of blocks of smaller size (step S118). In this case, a partition mode may be selected as the prediction mode for the layer before partitioning. Then, the process is repeated from step S106 to step S116 described above for the block after partitioning.

In step S120 of Fig. 23, the motion vector setting section 43 compares the cost function values calculated for respective prediction modes, and selects the optimal prediction mode by which the cost function value is the smallest (step S120). Then, the motion vector setting section 43 outputs, to the motion compensation section 44, prediction mode information indicating the selected optimal prediction mode, size specification information (for example, the number of times of partition mode selection representing the number of times of block partitioning), corresponding motion vector information, and reference image information.

Next, the motion compensation section 44 generates a predicted pixel value according to the optimal prediction mode selected by the motion vector setting section 43 (step S122). Then, the motion compensation section 44 outputs predicted image data including the generated predicted pixel value to the mode selection section 50, and also, outputs the prediction mode information, the size specification information, the motion vector information and the reference image information to the mode selection section 50 as the information about inter prediction (step S124).

<4. Example Configuration of Image Decoding Device According to an Embodiment>

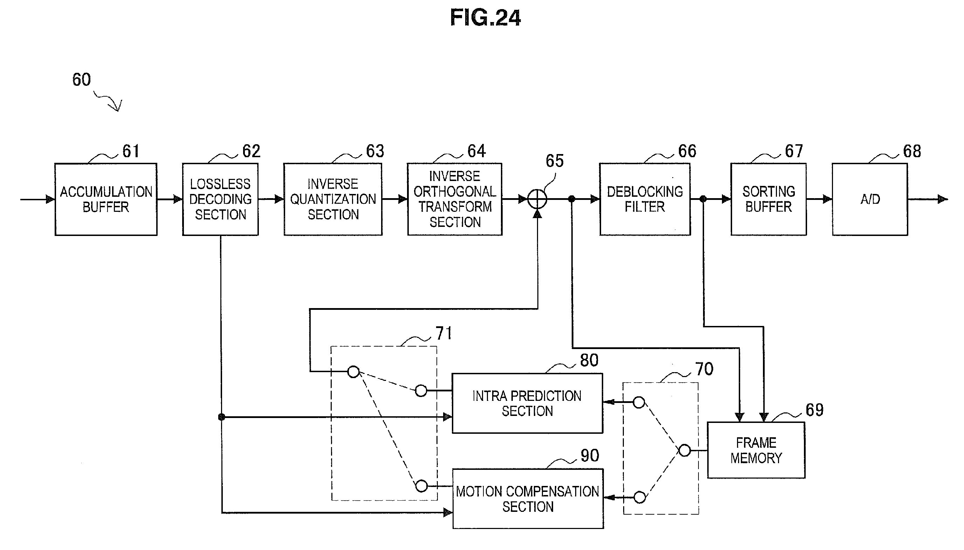

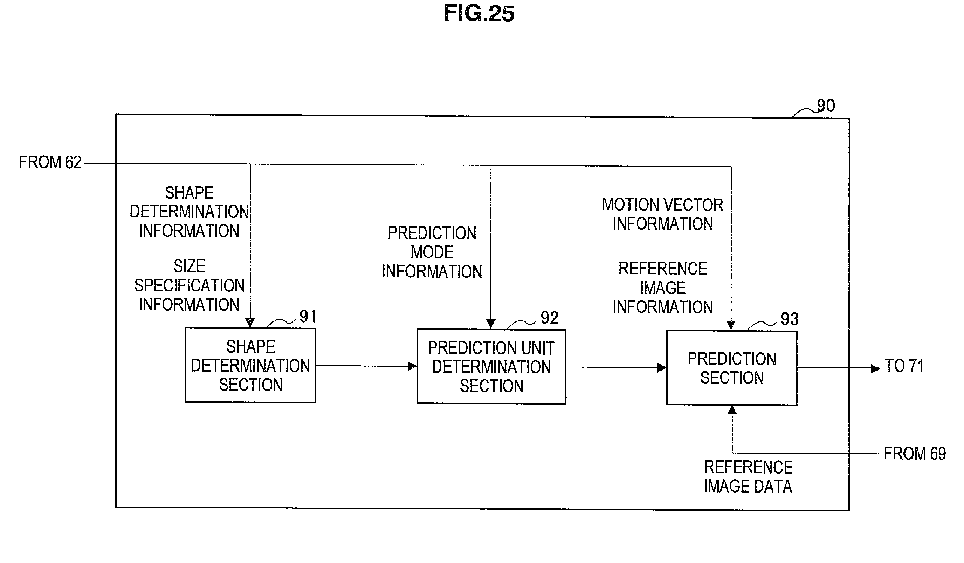

In this section, an example configuration of an image decoding device according to an embodiment will be described using Figs. 24 and 25.

[4-1. Example of Overall Configuration]

Fig. 24 is a block diagram showing an example of a configuration of an image decoding device 60 according to an embodiment. Referring to Fig. 24, the image decoding device 60 includes an accumulation buffer 61, a lossless decoding section 62, an inverse quantization section 63, an inverse orthogonal transform section 64, an addition section 65, a deblocking filter 66, a sorting buffer 67, a D/A (Digital to Analogue) conversion section 68, a frame memory 69, selectors 70 and 71, an intra prediction section 80, and a motion compensation section 90.

The accumulation buffer 61 temporarily stores an encoded stream input via a transmission line using a storage medium.

The lossless decoding section 62 decodes an encoded stream input from the accumulation buffer 61 according to the encoding method used at the time of encoding. Also, the lossless decoding section 62 decodes information multiplexed to the header region of the encoded stream. Information that is multiplexed to the header region of the encoded stream may include shape determination information within a sequence parameter set, a picture parameter set or a slice header, for example. Furthermore, information that is multiplexed to the header region of the encoded stream may include information about intra prediction and information about inter prediction in the block header, for example. The lossless decoding section 62 outputs the information about intra prediction to the intra prediction section 80. Also, the lossless decoding section 62 outputs the shape determination information and the information about inter prediction to the motion compensation section 90.

The inverse quantization section 63 inversely quantizes quantized data which has been decoded by the lossless decoding section 62. The inverse orthogonal transform section 64 generates predicted error data by performing inverse orthogonal transformation on transform coefficient data input from the inverse quantization section 63 according to the orthogonal transformation method used at the time of encoding. Then, the inverse orthogonal transform section 64 outputs the generated predicted error data to the addition section 65.

The addition section 65 adds the predicted error data input from the inverse orthogonal transform section 64 and predicted image data input from the selector 71 to thereby generate decoded image data. Then, the addition section 65 outputs the generated decoded image data to the deblocking filter 66 and the frame memory 69.

The deblocking filter 66 removes block distortion by filtering the decoded image data input from the addition section 65, and outputs the decoded image data after filtering to the sorting buffer 67 and the frame memory 69.

The sorting buffer 67 generates a series of image data in a time sequence by sorting images input from the deblocking filter 66. Then, the sorting buffer 67 outputs the generated image data to the D/A conversion section 68.

The D/A conversion section 68 converts the image data in a digital format input from the sorting buffer 67 into an image signal in an analogue format. Then, the D/A conversion section 68 causes an image to be displayed by outputting the analogue image signal to a display (not shown) connected to the image decoding device 60, for example.

The frame memory 69 stores, using a storage medium, the decoded image data before filtering input from the addition section 65, and the decoded image data after filtering input from the deblocking filter 66.

The selector 70 switches the output destination of the image data from the frame memory 69 between the intra prediction section 80 and the motion compensation section 90 for each block in the image according to mode information acquired by the lossless decoding section 62. For example, in the case the intra prediction mode is specified, the selector 70 outputs the decoded image data before filtering that is supplied from the frame memory 69 to the intra prediction section 80 as reference image data. Also, in the case the inter prediction mode is specified, the selector 70 outputs the decoded image data after filtering that is supplied from the frame memory 69 to the motion compensation section 90 as the reference image data.

The selector 71 switches the output source of predicted image data to be supplied to the addition section 65 between the intra prediction section 80 and the motion compensation section 90 for each block in the image according to the mode information acquired by the lossless decoding section 62. For example, in the case the intra prediction mode is specified, the selector 71 supplies to the addition section 65 the predicted image data output from the intra prediction section 80. In the case the inter prediction mode is specified, the selector 71 supplies to the addition section 65 the predicted image data output from the motion compensation section 90.

The intra prediction section 80 performs in-screen prediction of a pixel value based on the information about intra prediction input from the lossless decoding section 62 and the reference image data from the frame memory 69, and generates predicted image data. Then, the intra prediction section 80 outputs the generated predicted image data to the selector 71.

The motion compensation section 90 performs a motion compensation process based on the information about inter prediction input from the lossless decoding section 62 and the reference image data from the frame memory 69, and generates predicted image data. Then, the motion compensation section 90 outputs the generated predicted image data to the selector 71.

[4-2. Example Configuration of Motion Compensation Section]

Fig. 25 is a block diagram showing an example of a detailed configuration of the motion compensation section 90 of the image decoding device 60 shown in Fig. 24. Referring to Fig. 25, the motion compensation section 90 includes a shape determination section 91, a prediction unit determination section 92, and a prediction section 93.

The shape determination section 91 determines the shape of each block set in an image at the time of encoding of the image, using the shape determination and the size specification information included in the information about inter prediction input from the lossless encoding section 62. The shape determination information acquired by the shape determination section 91 may be the information described in the first, second or third embodiment described above, for example. For example, in the case "high_square_layer"=8 is defined as the shape determination information and the size of the block specified by the size specification information is 16 in the first embodiment, the shape determination section 91 may determine that the shape of the block is a rectangle whose ratio of a long side to a short side is two to one. Also, for example, in the case "width_to_height_ratio"=4 is defined as the shape determination information and the size of the block specified by the size specification information is equal to the largest size in the second embodiment, the shape determination section 91 may determine that the shape of the block is a rectangle whose ratio of a long side to a short side is four to one. Furthermore, for example, in the case the shape determination information as illustrated in Fig. 21 is defined and the size of the block specified by the size specification information is equal to the smallest size in the third embodiment, the shape determination section 91 may determine that the shape of the block is a square. Additionally, the size specification information may be represented by the number of times of block partitioning from the largest block, as described above.

The prediction unit determination section 92 determines the arrangement of the prediction unit(s) in each block using the prediction mode information input from the lossless encoding section 62. Here, the candidates for the arrangement of the prediction unit(s) for a square block and the candidates for the arrangement of the prediction unit(s) for a rectangular block are different in the present embodiment, as illustrated in Figs. 7, 8 and 14. Also, the candidates for the arrangement of the prediction unit(s) for a rectangular block are different depending on the ratio of a long side to a short side of the rectangle. Thus, the prediction unit determination section 92 determines the arrangement of the prediction unit(s) in each block according to the shape of each block determined by the shape determination section 91. For example, in the case the shape of a block is a square, and the prediction mode information indicates Mode 2, the arrangement of the prediction units may be determined to be that of Mode 2 (2NxN) in Fig. 7. Also, for example, in the case the shape of a block is a two-to-one rectangle, and the prediction mode information indicates Mode 4, the arrangement of the prediction units may be determined to be that of Mode 4 (N×N/2) in Fig. 8. Furthermore, in the case the shape of a block is a four-to-one rectangle, and the prediction mode information indicates Mode 3, the arrangement of the prediction units may be determined to be that of Mode 3 (2NxN) in Fig. 14.

The prediction section 93 generates a predicted pixel value for each block using the arrangement of the prediction unit(s) determined by the prediction unit determination section 92, a motion vector for each prediction unit and reference image information input from the lossless encoding section 62, and reference image data input from a frame memory. Then, the prediction section 93 outputs the predicted image data including the generated predicted pixel value to the selector 71.

<5. Flow of Process at the Time of Decoding According to an Embodiment>

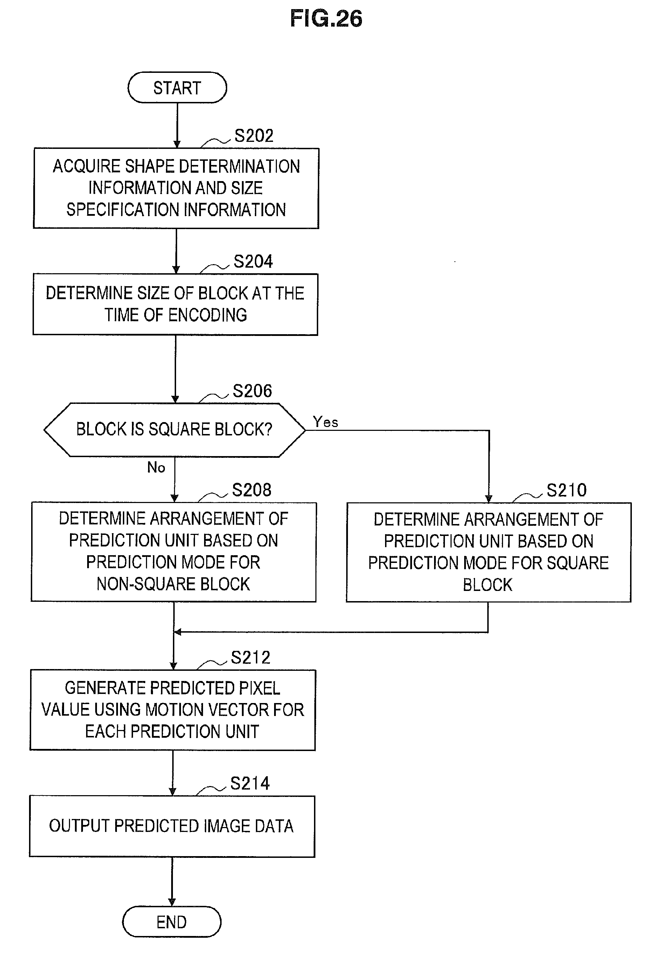

Next, a flow of a process at the time of decoding will be described using Fig. 26. Fig. 26 is a flow chart showing an example of a flow of a motion compensation process of the motion compensation section 90 of the image decoding device 60 according to the present embodiment.

Referring to Fig. 26, first, the shape determination section 91 acquires the shape determination information and the size specification information included in the information about inter prediction input from the lossless decoding section 62 (step S202). The shape determination information acquired here may be "high_square_layer" illustrated in Fig. 3, "width_to_height_ratio" illustrated in Fig. 12, or "number_of_layers","width_to_height_ratio[]" and "low_level[]" illustrated in Fig. 17, for example.

Next, the shape determination section 91 determines the size of a block set at the time of encoding of the image, using the acquired size specification information (step S204). The size specification information may be acquired as a partition mode indicating the number of times of block partitioning from the largest block, for example. Such a partition mode may be a part of the prediction mode information. In this case, the size of a block set at the time of encoding of the image may be determined based on the largest block size and the number of times of block partitioning.

Then, the shape determination section 91 determines whether or not the shape of a block set at the time of encoding of the image is a square based on the acquired shape determination information and the block size (step S206). The example of determination of a shape by the shape determination section 91 is the same as the example described above in relation to step S 106 in Fig. 22. In the case the shape of the block is a non-square here, the process proceeds to step S208. On the other hand, in the case the shape of the block is a square, the process proceeds to step S210.

In step S208, the prediction unit determination section 92 recognizes the prediction mode indicated by the prediction mode information input from the lossless encoding section 62 as the prediction mode for a non-square, and determines the arrangement of the prediction unit(s) for the block in question (step S208). Also, in step S210, the prediction unit determination section 92 recognizes the prediction mode indicated by the prediction mode information input from the lossless encoding section 62 as the prediction mode for a square, and determines the arrangement of the prediction unit(s) for the block in question (step S210).

Next, the prediction section 93 generates a predicted pixel value for a pixel in each block based on the arrangement of the prediction unit(s) determined by the prediction unit determination section 92, using the motion vector for each prediction unit and reference image data (step S212). Then, the prediction section 93 outputs predicted image data including the generated predicted pixel value to the selector 71 (step S214).

<6. Example Application>

The image encoding device 10 and the image decoding device 60 according to the embodiment described above may be applied to various electronic appliances such as a transmitter and a receiver for satellite broadcasting, cable broadcasting such as cable TV, distribution on the Internet, distribution to terminals via cellular communication, and the like, a recording device that records images in a medium such as an optical disc, a magnetic disk or a flash memory, a reproduction device that reproduces images from such storage medium, and the like. Four example applications will be described below.

[6-1. First Example Application]

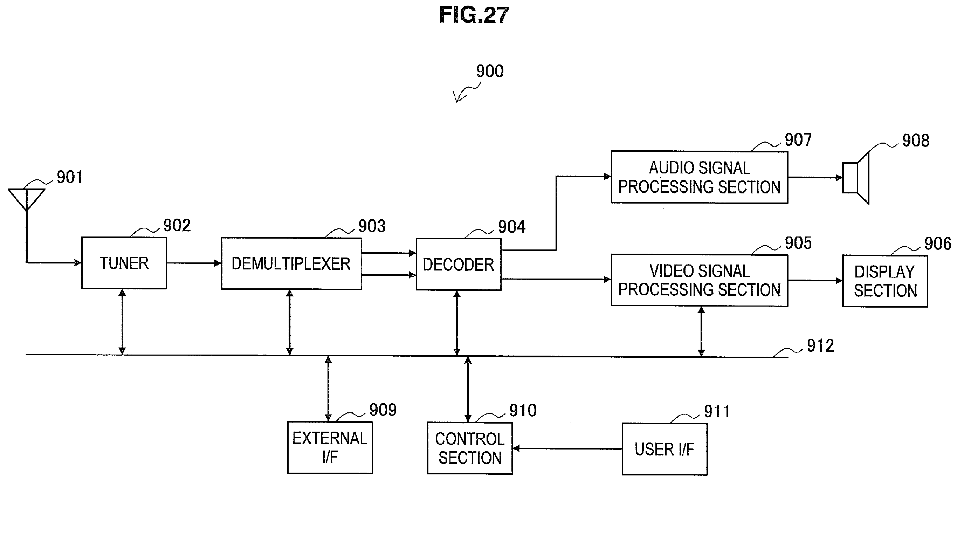

Fig. 27 is a block diagram showing an example of a schematic configuration of a television adopting the embodiment described above. A television 900 includes an antenna 901, a tuner 902, a demultiplexer 903, a decoder 904, an video signal processing section 905, a display section 906, an audio signal processing section 907, a speaker 908, an external interface 909, a control section 910, a user interface 911, and a bus 912.

The tuner 902 extracts a signal of a desired channel from broadcast signals received via the antenna 901, and demodulates the extracted signal. Then, the tuner 902 outputs an encoded bit stream obtained by demodulation to the demultiplexer 903. That is, the tuner 902 serves as transmission means of the televisions 900 for receiving an encoded stream in which an image is encoded and the shape determination information described above.

The demultiplexer 903 separates a video stream and an audio stream of a program to be viewed from the encoded bit stream, and outputs each stream which has been separated to the decoder 904. Also, the demultiplexer 903 extracts auxiliary data such as an EPG (Electronic Program Guide) from the encoded bit stream, and supplies the extracted data to the control section 910. Additionally, the demultiplexer 903 may perform descrambling in the case the encoded bit stream is scrambled.

The decoder 904 decodes the video stream and the audio stream input from the demultiplexer 903. Then, the decoder 904 outputs video data generated by the decoding process to the video signal processing section 905. Also, the decoder 904 outputs the audio data generated by the decoding process to the audio signal processing section 907.

The video signal processing section 905 reproduces the video data input from the decoder 904, and causes the display section 906 to display the video. The video signal processing section 905 may also cause the display section 906 to display an application screen supplied via a network. Further, the video signal processing section 905 may perform an additional process such as noise removal, for example, on the video data according to the setting. Furthermore, the video signal processing section 905 may generate an image of a GUI (Graphical User Interface) such as a menu, a button, a cursor or the like, for example, and superimpose the generated image on an output image.

The display section 906 is driven by a drive signal supplied by the video signal processing section 905, and displays a video or an image on an video screen of a display device (for example, a liquid crystal display, a plasma display, an OLED, or the like).

The audio signal processing section 907 performs reproduction processes such as D/A conversion and amplification on the audio data input from the decoder 904, and outputs audio from the speaker 908. Also, the audio signal processing section 907 may perform an additional process such as noise removal on the audio data.

The external interface 909 is an interface for connecting the television 900 and an external appliance or a network. For example, a video stream or an audio stream received via the external interface 909 may be decoded by the decoder 904. That is, the external interface 909 also serves as transmission means of the televisions 900 for receiving an encoded stream in which an image is encoded and the shape determination information described above.

The control section 910 includes a processor such as a CPU (Central Processing Unit), and a memory such as an RAM (Random Access Memory), an ROM (Read Only Memory), or the like. The memory stores a program to be executed by the CPU, program data, EPG data, data acquired via a network, and the like. The program stored in the memory is read and executed by the CPU at the time of activation of the television 900, for example. The CPU controls the operation of the television 900 according to an operation signal input from the user interface 911, for example, by executing the program.

The user interface 911 is connected to the control section 910. The user interface 911 includes a button and a switch used by a user to operate the television 900, and a receiving section for a remote control signal, for example. The user interface 911 detects an operation of a user via these structural elements, generates an operation signal, and outputs the generated operation signal to the control section 910.

The bus 912 interconnects the tuner 902, the demultiplexer 903, the decoder 904, the video signal processing section 905, the audio signal processing section 907, the external interface 909, and the control section 910.

In the television 900 configured in this manner, the decoder 904 has a function of the image decoding device 60 according to the embodiment described above. Accordingly, in the television 900, various effects can be acquired, such as the increase in the compression ratio due to the extension of a block size for motion prediction, while suppressing the increase in the line memory.

[6-2. Second Example Application]

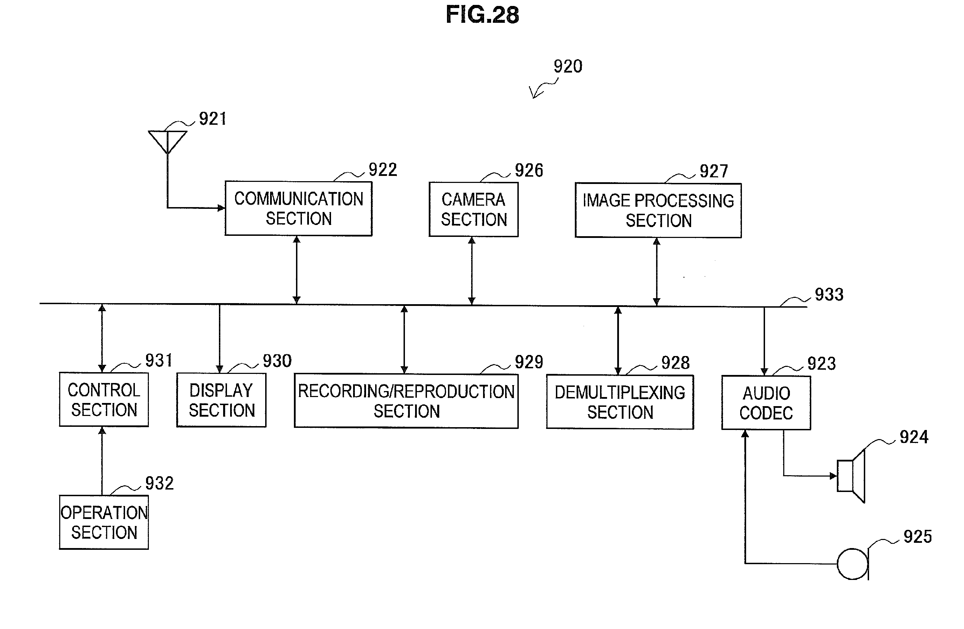

Fig. 28 is a block diagram showing an example of a schematic configuration of a mobile phone adopting the embodiment described above. A mobile phone 920 includes an antenna 921, a communication section 922, an audio codec 923, a speaker 924, a microphone 925, a camera section 926, an image processing section 927, a demultiplexing section 928, a recording/reproduction section 929, a display section 930, a control section 931, an operation section 932, and a bus 933.

The antenna 921 is connected to the communication section 922. The speaker 924 and the microphone 925 are connected to the audio codec 923. The operation section 932 is connected to the control section 931. The bus 933 interconnects the communication section 922, the audio codec 923, the camera section 926, the image processing section 927, the demultiplexing section 928, the recording/reproduction section 929, the display section 930, and the control section 931.

The mobile phone 920 performs operation such as transmission/reception of audio signal, transmission/reception of emails or image data, image capturing, recording of data, and the like, in various operation modes including an audio communication mode, a data communication mode, an image capturing mode, and a videophone mode.

In the audio communication mode, an analogue audio signal generated by the microphone 925 is supplied to the audio codec 923. The audio codec 923 converts the analogue audio signal into audio data, and A/D converts and compresses the converted audio data. Then, the audio codec 923 outputs the compressed audio data to the communication section 922. The communication section 922 encodes and modulates the audio data, and generates a transmission signal. Then, the communication section 922 transmits the generated transmission signal to a base station (not shown) via the antenna 921. Also, the communication section 922 amplifies a wireless signal received via the antenna 921 and converts the frequency of the wireless signal, and acquires a received signal. Then, the communication section 922 demodulates and decodes the received signal and generates audio data, and outputs the generated audio data to the audio codec 923. The audio codec 923 extends and D/A converts the audio data, and generates an analogue audio signal. Then, the audio codec 923 supplies the generated audio signal to the speaker 924 and causes the audio to be output.

Also, in the data communication mode, the control section 931 generates text data that makes up an email, according to an operation of a user via the operation section 932, for example. Moreover, the control section 931 causes the text to be displayed on the display section 930. Furthermore, the control section 931 generates email data according to a transmission instruction of the user via the operation section 932, and outputs the generated email data to the communication section 922. Then, the communication section 922 encodes and modulates the email data, and generates a transmission signal. Then, the communication section 922 transmits the generated transmission signal to a base station (not shown) via the antenna 921. Also, the communication section 922 amplifies a wireless signal received via the antenna 921 and converts the frequency of the wireless signal, and acquires a received signal. Then, the communication section 922 demodulates and decodes the received signal, restores the email data, and outputs the restored email data to the control section 931. The control section 931 causes the display section 930 to display the contents of the email, and also, causes the email data to be stored in the storage medium of the recording/reproduction section 929.

The recording/reproduction section 929 includes an arbitrary readable and writable storage medium. For example, the storage medium may be a built-in storage medium such as an RAM, a flash memory or the like, or an externally mounted storage medium such as a hard disk, a magnetic disk, a magneto-optical disk, an optical disc, an USB memory, a memory card, or the like.

Furthermore, in the image capturing mode, the camera section 926 captures an image of a subject, generates image data, and outputs the generated image data to the image processing section 927, for example. The image processing section 927 encodes the image data input from the camera section 926, and causes the encoded stream to be stored in the storage medium of the recording/reproduction section 929.

Furthermore, in the videophone mode, the demultiplexing section 928 multiplexes a video stream encoded by the image processing section 927 and an audio stream input from the audio codec 923, and outputs the multiplexed stream to the communication section 922, for example. The communication section 922 encodes and modulates the stream, and generates a transmission signal. Then, the communication section 922 transmits the generated transmission signal to a base station (not shown) via the antenna 921. Also, the communication section 922 amplifies a wireless signal received via the antenna 921 and converts the frequency of the wireless signal, and acquires a received signal. These transmission signal and received signal may include an encoded bit stream and the shape determination information described above. Then, the communication section 922 demodulates and decodes the received signal, restores the stream, and outputs the restored stream to the demultiplexing section 928. The demultiplexing section 928 separates a video stream and an audio stream from the input stream, and outputs the video stream to the image processing section 927 and the audio stream to the audio codec 923. The image processing section 927 decodes the video stream, and generates video data. The video data is supplied to the display section 930, and a series of images is displayed by the display section 930. The audio codec 923 extends and D/A converts the audio stream, and generates an analogue audio signal. Then, the audio codec 923 supplies the generated audio signal to the speaker 924 and causes the audio to be output.

In the mobile phone 920 configured in this manner, the image processing section 927 has a function of the image encoding device 10 and the image decoding device 60 according to the embodiment described above. Accordingly, in the mobile phone 920, various effects can be acquired, such as the increase in the compression ratio due to the extension of a block size for motion prediction, while suppressing the increase in the line memory.

[6-3. Third Example Application]

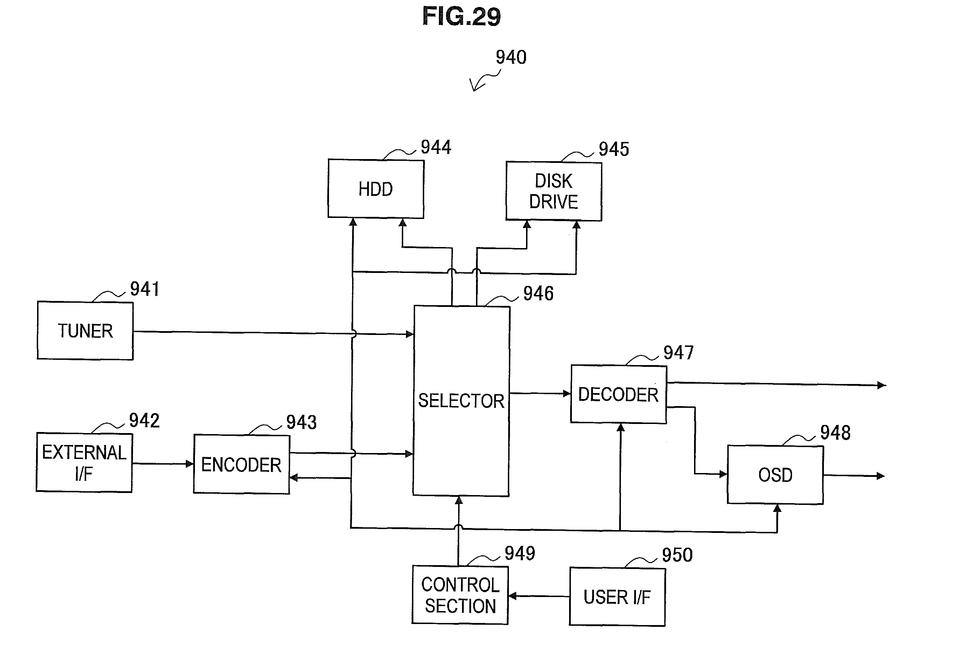

Fig. 29 is a block diagram showing an example of a schematic configuration of a recording/reproduction device adopting the embodiment described above. A recording/reproduction device 940 encodes, and records in a recording medium, audio data and video data of a received broadcast program, for example. The recording/reproduction device 940 may also encode, and record in the recording medium, audio data and video data acquired from another device, for example. Furthermore, the recording/reproduction device 940 reproduces, using a monitor or a speaker, data recorded in the recording medium, according to an instruction of a user, for example. At this time, the recording/reproduction device 940 decodes the audio data and the video data.

The recording/reproduction device 940 includes a tuner 941, an external interface 942, an encoder 943, an HDD (Hard Disk Drive) 944, a disc drive 945, a selector 946, a decoder 947, an OSD (On-Screen Display) 948, a control section 949, and a user interface 950.

The tuner 941 extracts a signal of a desired channel from broadcast signals received via an antenna (not shown), and demodulates the extracted signal. Then, the tuner 941 outputs an encoded bit stream obtained by demodulation to the selector 946. That is, the tuner 941 serves as transmission means of the recording/reproduction device 940.

The external interface 942 is an interface for connecting the recording/reproduction device 940 and an external appliance or a network. For example, the external interface 942 may be an IEEE 1394 interface, a network interface, an USB interface, a flash memory interface, or the like. For example, video data and audio data received by the external interface 942 are input to the encoder 943. That is, the external interface 942 serves as transmission means of the recording/reproduction device 940.

In the case the video data and the audio data input from the external interface 942 are not encoded, the encoder 943 encodes the video data and the audio data. Then, the encoder 943 outputs the encoded bit stream to the selector 946.

The HDD 944 records in an internal hard disk an encoded bit stream, which is compressed content data of a video or audio, various programs, and other pieces of data. Also, the HDD 944 reads these pieces of data from the hard disk at the time of reproducing a video or audio.

The disc drive 945 records or reads data in a recording medium that is mounted. A recording medium that is mounted on the disc drive 945 may be a DVD disc (a DVD-Video, a DVD-RAM, a DVD-R, a DVD-RW, a DVD+, a DVD+RW, or the like), a Blu-ray (registered trademark) disc, or the like, for example.

The selector 946 selects, at the time of recording a video or audio, an encoded bit stream input from the tuner 941 or the encoder 943, and outputs the selected encoded bit stream to the HDD 944 or the disc drive 945. Also, the selector 946 outputs, at the time of reproducing a video or audio, an encoded bit stream input from the HDD 944 or the disc drive 945 to the decoder 947.

The decoder 947 decodes the encoded bit stream, and generates video data and audio data. Then, the decoder 947 outputs the generated video data to the OSD 948. Also, the decoder 904 outputs the generated audio data to an external speaker.

The OSD 948 reproduces the video data input from the decoder 947, and displays a video. Also, the OSD 948 may superimpose an image of a GUI, such as a menu, a button, a cursor or the like, for example, on a displayed video.

The control section 949 includes a processor such as a CPU, and a memory such as an RAM or an ROM. The memory stores a program to be executed by the CPU, program data, and the like. A program stored in the memory is read and executed by the CPU at the time of activation of the recording/reproduction device 940, for example. The CPU controls the operation of the recording/reproduction device 940 according to an operation signal input from the user interface 950, for example, by executing the program.

The user interface 950 is connected to the control section 949. The user interface 950 includes a button and a switch used by a user to operate the recording/reproduction device 940, and a receiving section for a remote control signal, for example. The user interface 950 detects an operation of a user via these structural elements, generates an operation signal, and outputs the generated operation signal to the control section 949.

In the recording/reproduction device 940 configured in this manner, the encoder 943 has a function of the image encoding device 10 according to the embodiment described above. Also, the decoder 947 has a function of the image decoding device 60 according to the embodiment described above. Accordingly, in the recording/reproduction device 940, various effects can be acquired, such as the increase in the compression ratio due to the extension of a block size for motion prediction, while suppressing the increase in the line memory.

[6-4. Fourth Example Application]

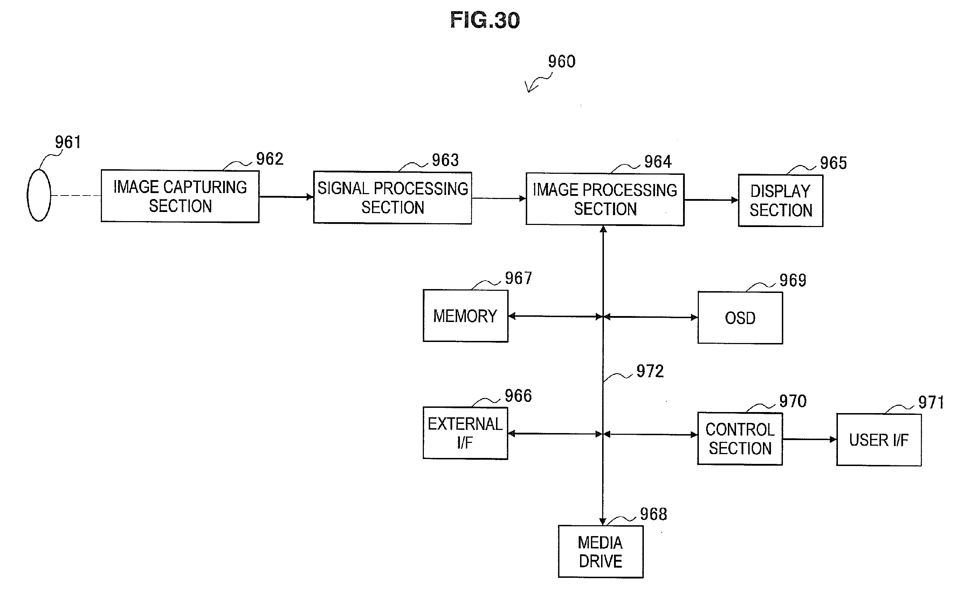

Fig. 30 is a block diagram showing an example of a schematic configuration of an image capturing device adopting the embodiment described above. An image capturing device 960 captures an image of a subject, generates an image, encodes the image data, and records the image data in a recording medium.

The image capturing device 960 includes an optical block 961, an image capturing section 962, a signal processing section 963, an image processing section 964, a display section 965, an external interface 966, a memory 967, a media drive 968, an OSD 969, a control section 970, a user interface 971, and a bus 972.

The optical block 961 is connected to the image capturing section 962. The image capturing section 962 is connected to the signal processing section 963. The display section 965 is connected to the image processing section 964. The user interface 971 is connected to the control section 970. The bus 972 interconnects the image processing section 964, the external interface 966, the memory 967, the media drive 968, the OSD 969, and the control section 970.

The optical block 961 includes a focus lens, an aperture stop mechanism, and the like. The optical block 961 forms an optical image of a subject on an image capturing surface of the image capturing section 962. The image capturing section 962 includes an image sensor such as a CCD, a CMOS or the like, and converts by photoelectric conversion the optical image formed on the image capturing surface into an image signal which is an electrical signal. Then, the image capturing section 962 outputs the image signal to the signal processing section 963.

The signal processing section 963 performs various camera signal processes, such as knee correction, gamma correction, color correction and the like, on the image signal input from the image capturing section 962. The signal processing section 963 outputs the image data after the camera signal process to the image processing section 964.

The image processing section 964 encodes the image data input from the signal processing section 963, and generates encoded data. Then, the image processing section 964 outputs the generated encoded data to the external interface 966 or the media drive 968. Also, the image processing section 964 decodes encoded data input from the external interface 966 or the media drive 968, and generates image data. Then, the image processing section 964 outputs the generated image data to the display section 965. Also, the image processing section 964 may output the image data input from the signal processing section 963 to the display section 965, and cause the image to be displayed. Furthermore, the image processing section 964 may superimpose data for display acquired from the OSD 969 on an image to be output to the display section 965.

The OSD 969 generates an image of a GUI, such as a menu, a button, a cursor or the like, for example, and outputs the generated image to the image processing section 964.

The external interface 966 is configured as an USB input/output terminal, for example. The external interface 966 connects the image capturing device 960 and a printer at the time of printing an image, for example. Also, a drive is connected to the external interface 966 as necessary. A removable medium, such as a magnetic disk, an optical disc or the like, for example, is mounted on the drive, and a program read from the removable medium may be installed in the image capturing device 960. Furthermore, the external interface 966 may be configured as a network interface to be connected to a network such as a LAN, the Internet or the like. That is, the external interface 966 serves as transmission means of the image capturing device 960.

A recording medium to be mounted on the media drive 968 may be an arbitrary readable and writable removable medium, such as a magnetic disk, a magneto-optical disk, an optical disc, a semiconductor memory or the like, for example. Also, a recording medium may be fixedly mounted on the media drive 968, configuring a non-transportable storage section such as a built-in hard disk drive or an SSD (Solid State Drive), for example.

The control section 970 includes a processor such as a CPU, and a memory such as an RAM or an ROM. The memory stores a program to be executed by the CPU, program data, and the like. A program stored in the memory is read and executed by the CPU at the time of activation of the image capturing device 960, for example. The CPU controls the operation of the image capturing device 960 according to an operation signal input from the user interface 971, for example, by executing the program.

The user interface 971 is connected to the control section 970. The user interface 971 includes a button, a switch and the like used by a user to operate the image capturing device 960, for example. The user interface 971 detects an operation of a user via these structural elements, generates an operation signal, and outputs the generated operation signal to the control section 970.

In the image capturing device 960 configured in this manner, the image processing section 964 has a function of the image encoding device 10 and the image decoding device 60 according to the embodiment described above. Thus, with the image capturing device 960, various effects can be acquired, such as the increase in the compression ratio due to the extension of a block size for motion prediction, while suppressing the increase in the line memory.

<7. Summary>

Heretofore, the image encoding device 10 and the image decoding device 60 according to an embodiment has been described using Figs. 1 to 30. According to the present embodiment, when encoding an image, the shape of a block set in the image is determined using the shape determination information for determining the shape of a block according to the size, and a motion vector to be used for prediction of an image in each prediction unit is set for each prediction unit arranged according to the shape. Also, when decoding an image, the shape of each block in an image is determined using the shape determination information and the block size, and a predicted image for each block is generated based on the arrangement of prediction unit(s) according to the shape and a motion vector. Therefore, a block of a shape other than a square can be used for motion prediction. The increase in a line memory can thereby be suppressed even in a case of extending the block size for motion prediction to increase the compression ratio, for example.

Also, according to the present embodiment, the shape of a largest block that can be set in an image can be made a non-square, and at the same time, the shape of a smaller block can be made a square. Thus, the encoding method proposed in the present specification can be realized while maintaining the compatibility with an existing encoding method according to which a largest block is a square.

Furthermore, according to the present embodiment, the shape determination information can be input by a user. The shape determination information input by a user is multiplexed to a sequence parameter set, a picture parameter set or a slice header of an encoded stream, and is transmitted from the encoding side to the decoding side. The shape of a block can thereby be flexibly defined by a user using the encoding method proposed in the present specification according to various needs regarding the size of a line memory, the compression ratio, and the image quality, and the definition can be used by both the encoding side and the decoding side.

Still further, according to the present embodiment, various prediction modes (candidates for arrangement of prediction units) are provided also for a non-square block. Thus, motion prediction can be effectively performed according to the contents of an image also in the case of using a block of a shape other than a square.

Additionally, in the present specification, an example has been mainly described where the shape determination information is multiplexed within a sequence parameter set, a picture parameter set or a slice header, for example, of an encoded stream, and the encoded stream is transmitted from the encoding side to the decoding side. However, the method of transmitting the shape determination information is not limited to such an example. For example, the shape determination information may be transmitted or recorded as individual data that is associated with an encoded bit stream, without being multiplexed to the encoded bit stream. The term "associate" here means to enable an image included in a bit stream (or a part of an image, such as a slice or a block) and information corresponding to the image to link to each other at the time of decoding. That is, the shape determination information may be transmitted on a different transmission line from the image (or the bit stream). Or, the shape determination information may be recorded on a different recording medium (or in a different recording area on the same recording medium) from the image (or the bit stream). Furthermore, the shape determination information and the image (or the bit stream) may be associated with each other on the basis of arbitrary units such as a plurality of frames, one frame, a part of a frame or the like, for example.

Heretofore, a preferred embodiment of the present disclosure has been described in detail while referring to the appended drawings, but the technical scope of the present disclosure is not limited to such an example. It is apparent that a person having an ordinary skill in the art of the technology of the present disclosure may make various alterations or modifications within the scope of the technical ideas described in the claims, and these are, of course, understood to be within the technical scope of the present disclosure.

Reference Signs List

| | |
|---|---|
| 10 | Image encoding device (Image processing device) |
| 16 | Encoding section |
| 42 | Shape determination section |
| 43 | Motion vector setting section |
| 60 | Image decoding device (Image processing device) |
| 62 | Decoding section |
| 91 | Shape determination section |
| 92 | Prediction unit determination section |
| 93 | Prediction section |

**Claims**

1.  An image processing device comprising:

    a shape determination section for determining a shape of a block set in an image using shape determination information for determining a shape of a block that is in accordance with a size;
    a motion vector setting section for arranging a prediction unit in each block in the image according to the shape determined by the shape determination section, and setting, for each arranged prediction unit, a motion vector to be used for prediction of an image in the prediction unit; and
    an encoding section for encoding the image using the motion vector set by the motion vector setting section.

2.  The image processing device according to claim 1, wherein the shape determination information includes information about a boundary value for a block size that separates a square block and a non-square block.

3.  The image processing device according to claim 2, wherein the shape determination section determines that a shape of a block of a larger size than the boundary value is a non-square, and that a shape of a block of a smaller size than the boundary value is a square.

4.  The image processing device according to claim 3, wherein a shape of each block in the image is a square or a rectangle with a fixed ratio of a long side to a short side.

5.  The image processing device according to claim 1,
    wherein a shape of each block in the image is a square or a rectangle, and
    wherein the shape determination information includes ratio information defining a ratio of a long side to a short side of a block.

6.  The image processing device according to claim 5,
    wherein the shape determination information includes number-of-layers information defining the number of layers whose ratios of a long side to a short side of a block are different from one another, and
    wherein the ratio information is information defining the ratio for each of the layers.

7.  The image processing device according to claim 1, wherein the motion vector setting section outputs, for each block, information indicating a size of each block set in the image and prediction mode information specifying an arrangement pattern of a prediction unit in the block.

8.  The image processing device according to claim 1,
    wherein a shape of each block in the image is a square or a rectangle, and
    wherein candidates for arrangement of a prediction unit for a square block and candidates for arrangement of a prediction unit for a rectangular block are different.

9.  The image processing device according to claim 1, wherein the shape determination information is allowed to be input by a user.

**10.** The image processing device according to claim 1, further comprising
transmission means for transmitting an encoded stream generated by the encoding section and the shape determination information.

**11.** The image processing device according to claim 10, wherein the encoding section multiplexes the shape determination information to a sequence parameter set, a picture parameter set or a slice header of the encoded stream.

**12.** An image processing method for processing an image, comprising:

determining a shape of a block set in an image using shape determination information for determining a shape of a block that is in accordance with a size;
arranging a prediction unit in each block in the image according to the determined shape, and setting, for each arranged prediction unit, a motion vector to be used for prediction of an image in the prediction unit; and
encoding the image using the set motion vector.

**13.** An image processing device comprising:

a shape determination section for determining a shape of each block in an image using shape determination information for determining a shape of a block that is in accordance with a size and a size of a block set in the image at a time of encoding of the image;
a prediction unit determination section for determining an arrangement of a prediction unit in each block according to the shape of each block determined by the shape determination section;
a prediction section for generating a predicted image for each block using the arrangement of a prediction unit determined by the prediction unit determination section and a motion vector acquired for each prediction unit; and
a decoding section for decoding an encoded stream in which the image is encoded, using the predicted image generated by the prediction section.

**14.** The image processing device according to claim 13, wherein the shape determination information includes information about a boundary value for a block size that separates a square block and a non-square block.

**15.** The image processing device according to claim 14, wherein a shape of each block in the image is a square or a rectangle with a fixed ratio of a long side to a short side.

**16.** The image processing device according to claim 13,
wherein a shape of each block in the image is a square or a rectangle, and
wherein the shape determination information includes ratio information defining a ratio of a long side to a short side of a block.

**17.** The image processing device according to claim 16,
wherein the shape determination information includes number-of-layers information defining the number of layers whose ratios of a long side to a short side of a block are different from one another, and
wherein the ratio information is information defining the ratio for each of the layers.

**18.** The image processing device according to claim 13, wherein the shape determination section acquires the shape determination information from a sequence parameter set, a picture parameter set or a slice header multiplexed to the encoded stream.

**19.** The image processing device according to claim 13, wherein the shape determination section acquires information for determining a size of each block from a block header included in the encoded stream.

**20.** The image processing device according to claim 13,
wherein a shape of each block in the image is a square or a rectangle, and
wherein candidates for arrangement of a prediction unit for a square block and candidates for arrangement of a prediction unit for a rectangular block are different.

**21.** The image processing device according to claim 13, wherein the shape determination information is information acquired based on a user input at a device that has encoded the image.

**22.** The image processing device according to claim 13, further comprising receiving means for receiving the encoded stream and the shape determination information.

**23.** An image processing method for processing an image, comprising:

determining a shape of each block in an image using shape determination information for determining a shape of a block that is in accordance with a size and a size of a block set in the image at a time of encoding of the image;
determining an arrangement of a prediction unit in each block according to the determined shape of each block;
generating a predicted image for each block using the determined arrangement of a prediction unit and a motion vector acquired for each prediction unit; and
decoding an encoded stream in which the image is encoded, using the generated predicted image.

**FIG.1**

EP 2 592 834 A1

# FIG.2

TO 50       FROM 12       TO 16

40

PREDICTED
IMAGE DATA

INFORMATION
ABOUT INTER
PREDICTION

ORIGINAL
IMAGE DATA

41

INFORMATION
HOLDING
SECTION

USER
INPUT

44

MOTION
COMPENSATION
SECTION

43

MOTION VECTOR
SETTING SECTION

42

SHAPE
DETERMINATION
SECTION

REFERENCE IMAGE DATA

FROM 25

EP 2 592 834 A1

**FIG.3**

41a

| ITEM | PARAMETER NAME | DESCRIPTION | EXAMPLE DATA |
|---|---|---|---|
| LARGEST SIZE INFORMATION | high_layer | LARGEST BLOCK SIZE THAT CAN BE SET IS INDICATED | 64, 32, 16, 8, 4 |
| SMALLEST SIZE INFORMATION | low_layer | SMALLEST BLOCK SIZE THAT CAN BE SET IS INDICATED | 64, 32, 16, 8, 4 |
| SHAPE DETERMINATION INFORMATION | high_square_layer | BOUNDARY VALUE FOR BLOCK SIZE THAT SEPARATES SQUARE AND NON-SQUARE IS INDICATED | 64, 32, 16, 8, 4 |

| SIZE VALUE (N) | CORRESPONDING BLOCK SIZE | |
|---|---|---|
| | Square | Non-Square |
| 64 | 128x128 | 128x64 |
| 32 | 64x64 | 64x32 |
| 16 | 32x32 | 32x16 |
| 8 | 16x16 | 16x8 |
| 4 | 8x8 | — |

EP 2 592 834 A1

# FIG.4

BOUNDARY

41a

SQUARE

high_layer = 64
low_layer = 4
high_square_layer = 64

LARGEST SIZE
depth=0, Size=128x128
(N=64)

depth=1, Size=64x64
(N=32)

SMALLEST SIZE
depth=4, Size=8x8
(N=4)

BLOCK SIZE
(DEPTH)

EP 2 592 834 A1

# FIG.5

NON-SQUARE

LARGEST SIZE
depth=0, Size=128x64
(N=64)

depth=1, Size=64x32
(N=32)

SMALLEST SIZE
depth=3, Size=16x8
(N=8)

BLOCK SIZE
(DEPTH)

BOUNDARY

41a

EP 2 592 834 A1

# FIG.6

# FIG.7

Mode 0
(Skip/Direct, 2N x 2N)

Mode 1
(2N x 2N)

Mode 2
(2N x N)

Mode 3
(N x 2N)

Mode 4
(N x N)

Mode 5
(2N x nU)

Mode 6
(2N x nD)

Mode 7
(nL x 2N)

Mode 8
(nR x 2N)

# FIG.8

Mode 0
(Skip/Direct, 2N x N)

Mode 1
(2N x N)

Mode 2
(2N x N/2)

Mode 3
(N x N)

Mode 4
(N x N/2)

Mode 5
(N/2 x N, 3N/2 x N)

Mode 6
(3N/2 x N, N/2 x N)

Mode 7
(Triangle1)

Mode 8
(Triangle2)

Partition Mode (Mode 9)

or

EP 2 592 834 A1

# FIG.9

$\bigcirc$ : Prediction mode
n

$\ominus$ : Partition mode

Depth=0, N=64

Size = 128x64 : 0 1 ・・・ 8 ⊕ Depth=1, N=32

Size = 64x32 : 0 1 ・・・ 8 ⊕ Depth=2, N=16

Size = 32x16 : 0 1 ・・・ 8 ⊕ Depth=3, N=8

NON-SQUARE

SQUARE

BLOCK SIZE

Size = 16x16 : 0 1 ・・・ M ⊕ Depth=4, N=4

Size = 8x8 : 0 1 ・・・ M

EP 2 592 834 A1

# FIG.10

Type T0
(2N x N)

Type T1
(N x N)

Type T2
(N x N/2)

Type T3
(N/2 x N)

Type T4
(N/2 x N/2)

# FIG.11

Cb          Cr          Y

Y: 2NxN
Cb: NxN/2
Cr: NxN/2

Cb          Cr          | Y0 | Y1 |
                        | Y2 | Y3 |

b5|b4|b3|b2|b1|b0

**FIG.12**

41b

| ITEM | PARAMETER NAME | DESCRIPTION | EXAMPLE DATA |
|---|---|---|---|
| LARGEST SIZE INFORMATION | high_layer | LARGEST BLOCK SIZE THAT CAN BE SET IS INDICATED | 64, 32, 16, 8, 4 |
| SMALLEST SIZE INFORMATION | low_layer | SMALLEST BLOCK SIZE THAT CAN BE SET IS INDICATED | 64, 32, 16, 8, 4 |
| SHAPE DETERMINATION INFORMATION | width_to_height_ratio | RATIO OF LONG SIDE TO SHORT SIDE OF BLOCK OF LARGEST SIZE IS INDICATED | 1, 2, 4 |

EP 2 592 834 A1

# FIG.13

LARGEST SIZE
depth=0, Size=64x16
(N=16)

NON-SQUARE

SQUARE

depth=1, Size=16x16
(N=8)

SMALLEST SIZE
depth=2, Size=8x8
(N=4)

BLOCK SIZE
(DEPTH)

41b

high_layer = 16
low_layer = 4
width_to_height_ratio = 4

# FIG.14

Mode 0
(Skip/Direct, 4N x N)

Mode 1
(4N x N)

Mode 2
(4N x N/2)

Mode 3
(2N x N)

Mode 4
(N x N)

Mode 5
(N x N, 3N x N)

Mode 6
(3N x N, N x N)

Mode 7
(Triangle1)

Mode 8
(Triangle2)

Partition Mode (Mode 9)

or

EP 2 592 834 A1

# FIG.15

Type T0
(4N x N)

Type T1
(2N x N)

Type T2
(2N x N/2)

Type T3
(N x N)

Type T4
(N x N/2)

EP 2 592 834 A1

# FIG.16

EP 2 592 834 A1

Cb          Cr          Y

Y: 4NxN
Cb: 2NxN/2
Cr: 2NxN/2

Cb          Cr

| Y0 | Y1 |
| Y2 | Y3 |

b5|b4|b3|b2|b1|b0

## FIG.17

41c

| ITEM | PARAMETER NAME | DESCRIPTION | EXAMPLE DATA |
|---|---|---|---|
| LARGEST SIZE INFORMATION | max_high_level | LARGEST BLOCK SIZE THAT CAN BE SET IS INDICATED | 128, 64, 32, 16, 8 |
| SHAPE DETERMINATION INFORMATION | number_of_layers | NUMBER OF LAYERS WITH DIFFERENT RATIOS OF LONG SIDE TO SHORT SIDE IS INDICATED | 1, 2, 3, ⋯ |
| | width_to_height_ratio[ ] | RATIO OF LONG SIDE TO SHORT SIDE OF EACH LAYER IS INDICATED | (2, 1), (4, 1), (4, 2, 1) |
| | low_level[ ] | SMALLEST BLOCK SIZE OF EACH LAYER IS INDICATED | (16, 8), (32, 16), (32, 16, 8) |

| LEVEL | CORRESPONDING BLOCK SIZE | | |
|---|---|---|---|
| | ratio = 1 | ratio = 2 | ratio = 4 |
| 128 | 128x128 | – | – |
| 64 | 64x64 | 128x64 | 256x64 |
| 32 | 32x32 | 64x32 | 128x32 |
| 16 | 16x16 | 32x16 | 64x16 |
| 8 | 8x8 | 16x8 | 32x8 |

EP 2 592 834 A1

# FIG.18

LARGEST SIZE
depth=0, Size=32x16
(Lv=16)

ratio = 2

ratio = 1

depth=1, Size=16x16
(Lv=16)

SMALLEST SIZE
depth=2, Size=8x8
(Lv=8)

BLOCK SIZE
(DEPTH)

41c

max_high_level =16
number_of_layers = 2
width_to_height_ratio[ ]
= (2, 1)
low_level[ ] = (16, 8)

# FIG.19

LARGEST SIZE
depth=0, Size=64x16
(Lv=16)

| ratio = 4 |

41c

max_high_level =16
number_of_layers = 2
width_to_height_ratio[ ]
   = (4, 1)
low_level[ ] = (16, 8)

| ratio = 1 |

depth=1, Size=16x16
(Lv=16)

SMALLEST SIZE
depth=2, Size=8x8
(Lv=8)

BLOCK SIZE
(DEPTH)

# FIG.20

LARGEST SIZE

depth=0, Size=128x32
(Lv=32)

depth=1, Size=64x16
(Lv=16)

| ratio = 4 |
|---|

| ratio = 1 |
|---|

depth=2, Size=16x16
(Lv=16)

SMALLEST SIZE

depth=3, Size=8x8
(Lv=8)

BLOCK SIZE
(DEPTH)

41c

max_high_level =32
number_of_layers = 2
width_to_height_ratio[ ]
    = (4, 1)
low_level[ ] = (16, 8)

# FIG.21

LARGEST SIZE
depth=0, Size=64x16
(Lv=16)

ratio = 4

41c

max_high_level =16
number_of_layers = 3
width_to_height_ratio[ ]
= (4, 2, 1)
low_level[ ] = (16, 16, 8)

depth=1, Size=32x16
(Lv=16)

ratio = 2

ratio = 1

depth=2, Size=16x16
(Lv=16)

SMALLEST SIZE
depth=3, Size=8x8
(Lv=8)

BLOCK SIZE
(DEPTH)

EP 2 592 834 A1

# FIG.22

```
                    ( START )
                        |
                        |  S102
                        v
        ┌───────────────────────────────┐
        │  ACQUIRE SHAPE DETERMINATION   │
        │          INFORMATION           │
        └───────────────────────────────┘
                        |
                        |  S104
                        v
        ┌───────────────────────────────┐
        │    SET BLOCK OF LARGEST SIZE   │
        └───────────────────────────────┘
                        |
                        v
                        |  S106
                     /       \        Yes
                   < BLOCK IS SQUARE BLOCK? >──────────────┐
                     \       /                             │
                        | No                               │
                        |  S108                            |  S112
                        v                                  v
    ┌────────────────────────────────┐    ┌────────────────────────────────┐
    │  DECIDE MOTION VECTOR FOR EACH  │    │  DECIDE MOTION VECTOR FOR EACH  │
    │ PREDICTION UNIT IN EACH PREDICTION │  │ PREDICTION UNIT IN EACH PREDICTION │
    │  MODE FOR NON-SQUARE BLOCK      │    │  MODE FOR SQUARE BLOCK          │
    └────────────────────────────────┘    └────────────────────────────────┘
                        |  S110                            |  S114
                        v                                  v
    ┌────────────────────────────────┐    ┌────────────────────────────────┐
    │  CALCULATE COST FUNCTION VALUE  │    │  CALCULATE COST FUNCTION VALUE  │
    │    FOR EACH PREDICTION MODE     │    │    FOR EACH PREDICTION MODE     │
    └────────────────────────────────┘    └────────────────────────────────┘
                        |                                  |
                        |<─────────────────────────────────┘
                        v
                        |  S116
                     /       \        No
                   < SIZE OF BLOCK IS  >──────────────────┐
                   <  SMALLEST SIZE?   >                   │
                     \       /                             |  S118
                        | Yes                              v
                        v                    ┌────────────────────────────────┐
                      ( 1 )                  │  PARTITION BLOCK INTO           │
                                             │      SMALLER BLOCKS             │
                                             └────────────────────────────────┘
```

# FIG.23

```
        ┌───┐
        │ 1 │
        └─┬─┘
          │
          │        S120
          ▼
┌─────────────────────────────┐
│  SELECT OPTIMAL PREDICTION MODE │
│    BASED ON COST COMPARISON     │
└──────────────┬──────────────┘
               │        S122
               ▼
┌─────────────────────────────┐
│   GENERATE PREDICTED PIXEL VALUE │
│    BY OPTIMAL PREDICTION MODE    │
└──────────────┬──────────────┘
               │        S124
               ▼
┌─────────────────────────────┐
│  OUTPUT PREDICTED IMAGE DATA AND │
│ INFORMATION ABOUT INTER PREDICTION │
└──────────────┬──────────────┘
               │
               ▼
          (  END  )
```

**FIG.24**

# FIG.25

FROM 62 ─────

SHAPE
DETERMINATION
INFORMATION

SIZE
SPECIFICATION
INFORMATION

PREDICTION
MODE
INFORMATION

MOTION VECTOR
INFORMATION

REFERENCE
IMAGE
INFORMATION

90

91
SHAPE
DETERMINATION
SECTION

92
PREDICTION UNIT
DETERMINATION
SECTION

93
PREDICTION
SECTION

TO 71

FROM 69

REFERENCE
IMAGE DATA

EP 2 592 834 A1

# FIG.26

```
                    ┌──────────┐
                    │  START   │
                    └────┬─────┘
                         │        S202
                         ▼
        ┌────────────────────────────────────┐
        │  ACQUIRE SHAPE DETERMINATION        │
        │  INFORMATION AND SIZE               │
        │  SPECIFICATION INFORMATION          │
        └────────────────┬───────────────────┘
                         │        S204
                         ▼
        ┌────────────────────────────────────┐
        │  DETERMINE SIZE OF BLOCK AT THE     │
        │  TIME OF ENCODING                   │
        └────────────────┬───────────────────┘
                         │        S206
                         ▼
              ╱────────────────────╲          Yes
             ⟨  BLOCK IS SQUARE BLOCK?  ⟩──────────┐
              ╲────────────────────╱               │
                     │ No                          │
                     │       S208                  │      S210
                     ▼                             ▼
    ┌───────────────────────────┐   ┌───────────────────────────┐
    │  DETERMINE ARRANGEMENT OF  │   │  DETERMINE ARRANGEMENT OF  │
    │  PREDICTION UNIT BASED ON  │   │  PREDICTION UNIT BASED ON  │
    │  PREDICTION MODE FOR       │   │  PREDICTION MODE FOR SQUARE │
    │  NON-SQUARE BLOCK          │   │  BLOCK                     │
    └─────────────┬─────────────┘   └─────────────┬─────────────┘
                  │◄───────────────────────────────┘
                  │        S212
                  ▼
    ┌───────────────────────────┐
    │  GENERATE PREDICTED PIXEL  │
    │  VALUE USING MOTION VECTOR FOR │
    │  EACH PREDICTION UNIT      │
    └─────────────┬─────────────┘
                  │        S214
                  ▼
    ┌───────────────────────────┐
    │  OUTPUT PREDICTED IMAGE DATA │
    └─────────────┬─────────────┘
                  │
                  ▼
             ┌──────────┐
             │   END    │
             └──────────┘
```

# FIG.27

# FIG.28

EP 2 592 834 A1

# FIG.29

940

EP 2 592 834 A1

## FIG.30

EP 2 592 834 A1

960

961

962
IMAGE CAPTURING
SECTION

963
SIGNAL PROCESSING
SECTION

964
IMAGE PROCESSING
SECTION

965
DISPLAY
SECTION

967
MEMORY

969
OSD

972

966
EXTERNAL
I/F

970
CONTROL
SECTION

971
USER I/F

968
MEDIA
DRIVE

## INTERNATIONAL SEARCH REPORT

| | International application No. |
|---|---|
| | PCT/JP2011/063906 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/24-7/68

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Jeongyeon Lim et al., Description of video coding technology proposal by SK telecom, Sejong Univ. and Sungkyunkwan Univ., Joint Collaborative Team on Video Coding (JCT-VC) of ITU-T SG16 WP3 and ISO/IEC JTC1/SC29/WG11, JCTVC-A113, 1st Meeting: Dresden, DE, 2010.04, pp.1-8 | 1-23 |
| A | Andreas Krutz et al., Tool Experiment 4: Inter Prediction in HEVC, Joint Collaborative Team on Video Coding (JCT-VC) of ITU-T SG16 WP3 and ISO/IEC JTC1/SC29/WG11, JCTVC-A303, 1st Meeting: Dresden, DE, 2010.04, pp.1-8 | 1-23 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September, 2011 (02.09.11) | 13 September, 2011 (13.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/063906 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2007/034918 A1 (Mitsubishi Electric Corp.), 29 March 2007 (29.03.2007), entire text; all drawings & US 2009/0046781 A1     & EP 1950973 A1 & KR 10-2008-0068678 A   & CN 101273641 A & CN 101848391 A | 1-23 |
| A | WO 2004/008772 A1 (Mitsubishi Electric Corp.), 22 January 2004 (22.01.2004), entire text; all drawings & CA 2459229 A            & JP 2004-48552 A & EP 1418763 A1           & US 2004/0233990 A1 & CN 1557099 A | 1-23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUNG-CHANG LIM ; HAHYUN LEE ; JINHO LEE ; JONGHO KIM ; HAECHUL CHOI ; SEYOON JEONG ; JIN SOO CHOI.** Intra coding using extended block size. *ITU-Telecommunications Standardization Sector, Study Group 16 Question 6, Video Coding Experts Group,* 01 July 2009

- Video Coding Using Extended Block1 Sizes. STUDY GROUP16-CONTRIBUTION 123, ITU-Telecommunications Standardization Sector. Qualcomm Inc, January 2009